# EUROPEAN PATENT APPLICATION

(11) **EP 4 730 093 A1**
(43) Date of publication of application: **22.04.2026**
(21) Application number: 24823252.2
(22) Date of filing: 03.06.2024
(51) Int. Cl.: G06F 3/0483, G10K 15/02, G11B 27/02, G11B 27/34

(54) **INFORMATION PROCESSING DEVICE, INFORMATION PROCESSING METHOD, AND PROGRAM**

(30) Priority: 16.06.2023 JP 2023098924
(71) Applicant: Sony Group Corporation, Tokyo 108-0075 (JP)
(72) Inventor: MIKI, Haruko, Tokyo 108-0075 (JP)
(74) Representative: D Young & Co LLP
(86) International application number: PCT/JP2024/020145
(87) International publication number: WO 2024/257632

(57) **Abstract**

An information processing apparatus includes a control unit configured to perform control to display related content that is associated with music piece content and includes a plurality of pages on which a character or an image is displayed, and display a page guide indicating a page being displayed in a whole of the related content.

## Description

### TECHNICAL FIELD

The present technology relates to an information processing apparatus, an information processing method, and a program, and relates to display of content related to music piece content.

### BACKGROUND ART

For example, a lyrics sheet or a lyrics booklet is enclosed in a package medium of music such as an analog record or a music compact disc (CD), and a user has been able to enjoy listening to music while viewing artwork such as lyrics, photographs, pictures, and illustrations.

Furthermore, as in the following Patent Document 1, a music player having a lyrics display function and displaying lyrics while playing music is known.

### CITATION LIST

### PATENT DOCUMENT

Patent Document 1: Japanese Patent Application Laid-Open No. 2006-259236

### SUMMARY OF THE INVENTION

### PROBLEMS TO BE SOLVED BY THE INVENTION

In recent years, a form has been widespread in which a user purchases music piece content via network communication, in addition to purchasing a favorite music piece on a package medium such as a CD. In this case, the user can easily enjoy the music piece itself as sound, but has less opportunities for the user to enjoy things, such as a lyrics sheet, provided accompanying the music medium in the CD or the analog record.

A lyrics sheet and a lyrics booklet, on the other hand, also have an aspect of being a means of expression of a music artist, and have functions such as conveying lyrics and expressing a world view of a music piece with artwork. A size, a font, and the like of characters in lyrics display are also a part of expression of the artist.

In view of the above, when a music piece as digital content is provided to a user, it is desirable to also enable a lyrics sheet and a lyrics booklet to be provided to the user as a piece of work.

Therefore, the present disclosure proposes a technology for performing display desirable for a user on assumption that related content associated with music piece content is displayed, for example, a lyrics sheet, a lyrics booklet, or the like as digital content is displayed.

### SOLUTIONS TO PROBLEMS

An information processing apparatus according to the present technology includes a control unit configured to perform control to display related content that is associated with music piece content and includes a plurality of pages on which a character or an images is displayed, and display a page guide indicating a page being displayed in a whole of the related content.

For example, in a case where related content associated with music piece content is displayed on a screen as artwork including characters and images on a plurality of pages, page guiding is performed during the display. Note that the "characters" refer to a portion displayed as characters in a page, and the "image" is a generic term for display portions other than the characters, such as photographs, pictures, illustrations, and animations.

### BRIEF DESCRIPTION OF DRAWINGS

Fig. 1 is an explanatory diagram of a system configuration according to an embodiment of the present technology.
Fig. 2 is an explanatory diagram of a lyrics booklet as related content according to the embodiment.
Fig. 3 is an explanatory diagram of a lyrics booklet and a lyrics sheet as related content according to the embodiment.
Fig. 4 is an explanatory diagram of a display example of related content in a terminal device according to the embodiment.
Fig. 5 is a block diagram of an information processing apparatus according to the embodiment.
Fig. 6 is a flowchart of related content creation processing according to the embodiment.
Fig. 7 is an explanatory diagram of a related content creation screen according to the embodiment.
Fig. 8 is an explanatory diagram of the related content creation screen according to the embodiment.
Fig. 9 is an explanatory diagram of the related content creation screen according to the embodiment.
Fig. 10 is an explanatory diagram of the related content creation screen according to the embodiment.
Fig. 11 is an explanatory diagram of the related content creation screen according to the embodiment.
Fig. 12 is an explanatory diagram of the related content creation screen according to the embodiment.
Fig. 13 is an explanatory diagram of the related content creation screen according to the embodiment.
Fig. 14 is an explanatory diagram of a user interface image at a time of related content display, according to the embodiment.
Fig. 15 is an explanatory diagram of a content centric mode according to the embodiment.
Fig. 16 is an explanatory diagram of a display position guide according to the embodiment.
Fig. 17 is an explanatory diagram of the display position guide according to the embodiment.
Fig. 18 is an explanatory diagram of display of a default display position in the display position guide according to the embodiment.
Fig. 19 is an explanatory diagram of text range display in the display position guide according to the embodiment.
Fig. 20 is an explanatory diagram of a page guide according to the embodiment.
Fig. 21 is an explanatory diagram of a display position change in a page according to the embodiment.
Fig. 22 is an explanatory diagram of a display position change in a page according to the embodiment.
Fig. 23 is an explanatory diagram of a sharing mode according to the embodiment.
Fig. 24 is an explanatory diagram of the sharing mode according to the embodiment.
Fig. 25 is an explanatory diagram of the sharing mode according to the embodiment.
Fig. 26 is a flowchart of related content display processing according to the embodiment.
Fig. 27 is a flowchart of display setting processing according to the embodiment.
Fig. 28 is a flowchart of display update control processing according to the embodiment.
Fig. 29 is a flowchart of the display update control processing according to the embodiment.

### MODE FOR CARRYING OUT THE INVENTION

Hereinafter, an embodiment will be described in the following order.
<1. System Configuration and Display of Related Content>
<2. Configuration of Information Processing Apparatus>
<3. Related Content Generation and Editing>
<4. Related Content Display>
<5. Conclusion and Modifications>

Note that, in the present disclosure, "music piece content" is a general term for music data as digital content, and may refer to music piece data of one music track or collectively refer to music piece data of a plurality of music tracks on a music album basis or the like.

"Related content" refers to digital content associated with music piece content, and is, for example, digital content provided accompanying purchase or distribution of individual music piece content. In an embodiment, the related content is described by way of example as a lyrics booklet or a lyrics sheet.

The lyrics booklet is a leaflet in which lyrics, artwork with photographs or pictures, credits of artists or creators, and the like are placed on a plurality of pages. Furthermore, the lyrics sheet indicates one page instead of a plurality of pages, or one sheet of paper on which lyrics, artwork, credits, and the like are placed on the front and back. In the embodiment, the related content is obtained by converting the characters and the images expressed in the form of the leaflet or the one sheet of paper into digital content. For the sake of description, in a case where the lyrics booklet and the lyrics sheet are not particularly distinguished, the lyrics booklet and the lyrics sheet are collectively referred to as a "lyrics booklet or the like".

Such related content as the lyrics booklet or the like is provided as one or more pieces of image data. That is, the related content is image data including characters or images for every one page. However, text data corresponding to a display portion of characters of lyrics and the like may be included.

### <1. System Configuration and Display of Related Content>

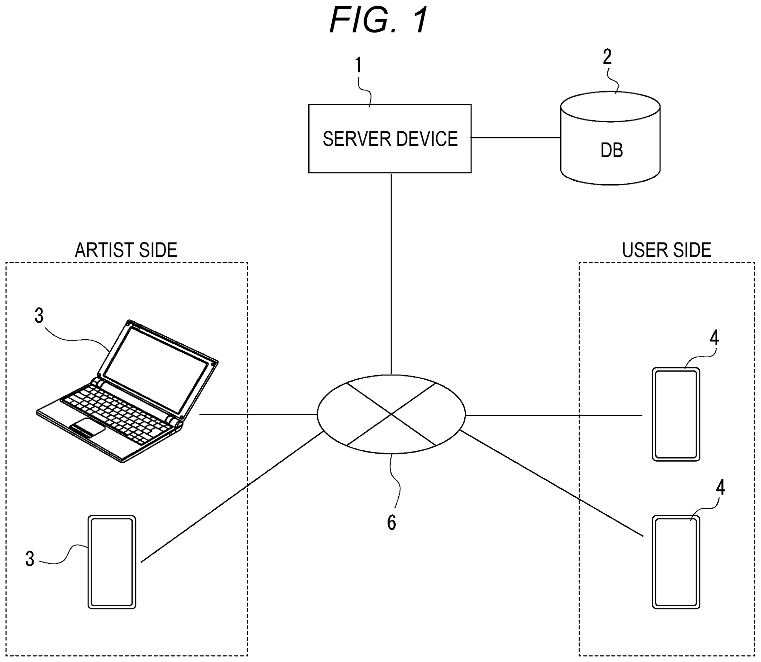

Fig. 1 illustrates a system configuration example according to an embodiment. Fig. 1 illustrates a server device 1, a database 2, a terminal device 3, and a terminal device 4.

The server device 1 is a server that sells and distributes content via a network 6. The database 2 stores various kinds of content such as music piece content and related content, and information (software program and data) necessary for processing execution of the server device 1.

The server device 1 includes one or a plurality of information processing apparatuses, and performs processing of transmitting information to the terminal device 4, receiving upload of information from the terminal device 3, and the like.

The terminal device 3 is an information processing apparatus used by an artist who creates music piece content. Furthermore, the terminal device 4 is an information processing apparatus used by a general user who purchases music piece content and the like. Specifically, a smartphone, a personal computer (PC), a tablet device, and the like are assumed as the terminal devices 3 and 4.

The terminal devices 3 and 4 can communicate with the server device 1 via the network 6. As the network 6, for example, the Internet, a home network, a local area network (LAN), a mobile communication network, and other various networks are assumed.

In such a system, the user can access the server device 1 via a predetermined application program or a web browser on the terminal device 4, to purchase music piece content (a music piece album or a specific music piece) and the like.

Furthermore, the artist can create and edit a lyrics booklet or the like to be added to the music piece content by using the terminal device 3. That is, the artist can not only simply provide music data as music piece content but also express artwork in the lyrics booklet or the like. The lyrics booklet or the like created and edited using the terminal device 3 is uploaded to the server device 1 and registered as related content associated with music piece content.

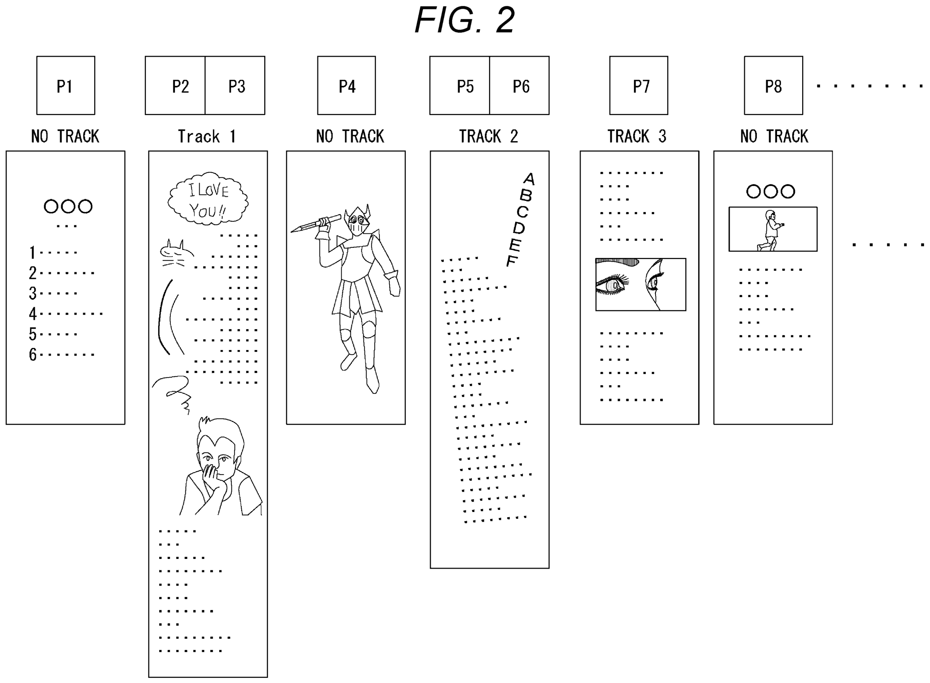

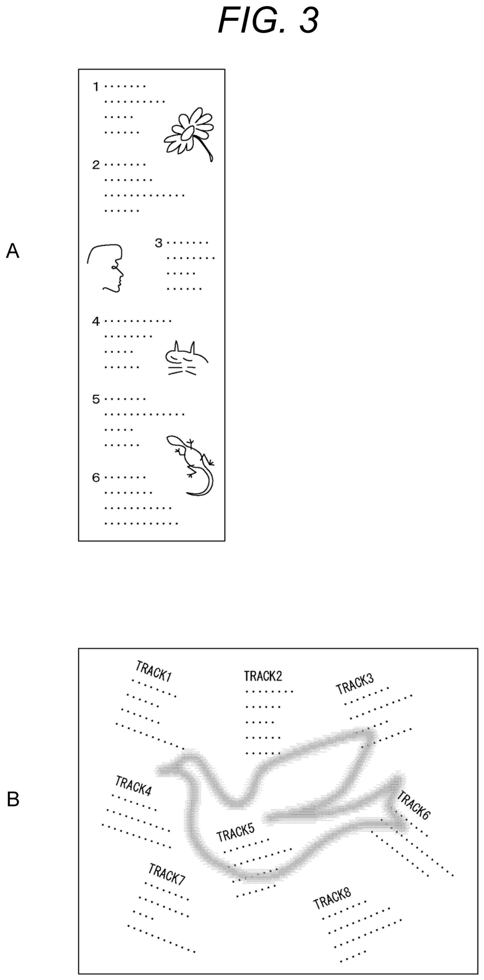

Figs. 2 and 3 illustrate examples of the lyrics booklet or the like as related content.

Fig. 2 illustrates an example of a lyrics booklet including a plurality of pages. For example, a lyrics booklet enclosed in a CD and the like as a music album includes a plurality of pages as illustrated as pages P1, P2,..., and lyrics and artwork are placed on one page. The related content as the lyrics booklet is obtained by converting an image of each page into digital content including a plurality of pieces of image data, for example, vertically long image data suitable for display on the terminal device 4, which is a smartphone.

The individual pages P1, P2, ... include a page on which lyrics of one music track are placed, a page on which lyrics of a plurality of music tracks are placed, a page on which lyrics are not placed and only artwork is included, a page on which music titles and credits are placed, and the like.

Furthermore, the related content also includes a form of one piece as a lyrics sheet. Fig. 3A illustrates image data (related content) in a form as a lyrics sheet in which lyrics and artwork of a plurality of music tracks are placed in a vertically long region.

Furthermore, there are various shapes, and Fig. 3B illustrates image data (related content) as a lyrics sheet in which lyrics and artwork of a plurality of music tracks are placed in a shape close to a square.

Furthermore, there may be a case where two pages are configured as front and back sides of a paper sheet in the forms as illustrated in Figs. 3A and 3B, or a case where a lyrics booklet is formed over a larger number of pages in the forms as illustrated in Figs. 3A and 3B.

Items placed in the lyrics booklet or the like can be regarded as one of expressions on the artist side, such as a page shape of the lyrics booklet or the like, a position and a mode of the lyrics to be placed, a size and a font of characters, an arrangement of artwork, a type of expression with a photograph, an illustration, a picture, a background color, a pattern, or a combination thereof, and a written position and a written form of credits of a composer, a lyricist, an arranger, a performer, a creator, or the like.

Therefore, in the present embodiment, in a case where the user purchases music piece content such as a music album on the terminal device 4, for example, not only music playback, but also display of the lyrics booklet or the like is performed.

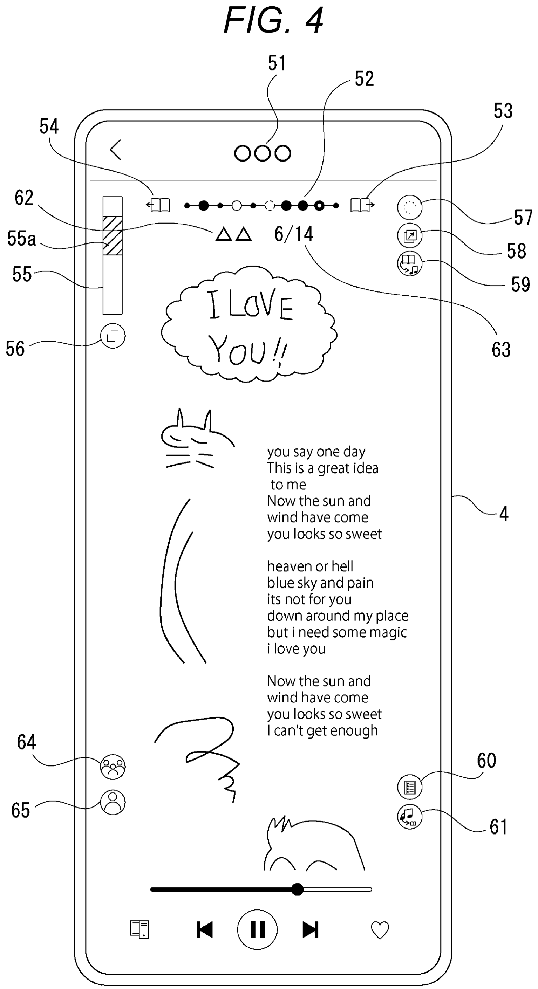

For example, Fig. 4 illustrates a state in which the lyrics booklet or the like is displayed during music playback on the terminal device 4. In the figure, various icons and guide information are also displayed as a user interface, together with an image of the lyrics booklet or the like. Individual functions will be described later.

In the present embodiment, by displaying the lyrics booklet or the like in this way, expression of the artist with the lyrics booklet or the like accompanying the music is delivered to the user. As a result, for example, it is possible to provide the user with an experience equivalent to viewing a paper lyrics booklet or the like of a CD. Moreover, providing the lyrics booklet or the like as digital content enables the user to experience more various ways of enjoyment. Therefore, the icons and the like are displayed as the user interface. This is to achieve good usability for visual recognition on a screen and to provide various functions as digital content.

### <2. Configuration of Information Processing Apparatus>

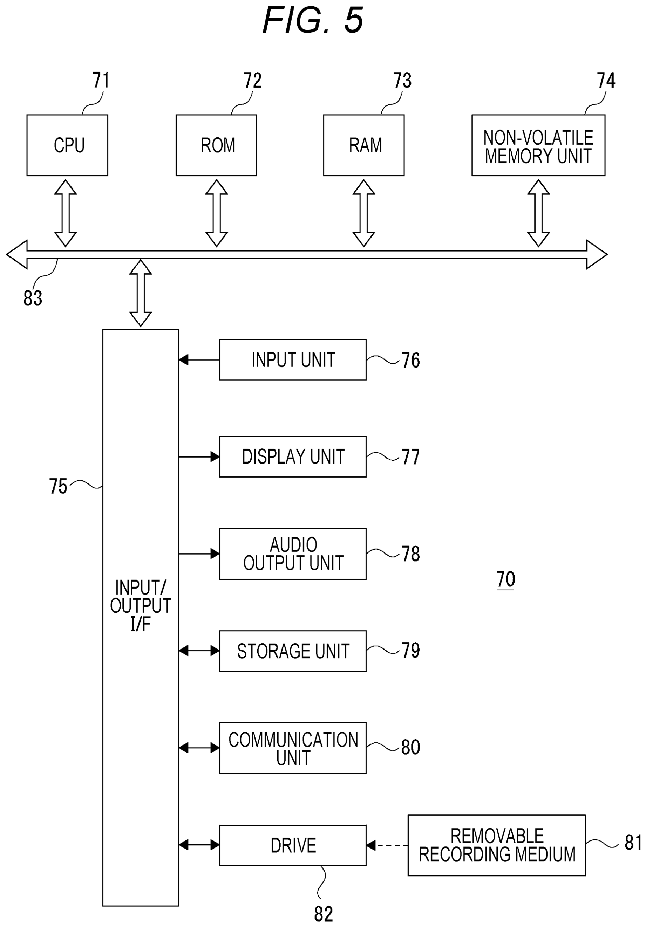

A configuration example of an information processing apparatus 70 that can be used as the terminal device 4, the terminal device 3, the server device 1, or the database 2 in Fig. 1 will be described with reference to Fig. 5.

The information processing apparatus 70 can be configured as, for example, a dedicated workstation, a general-purpose personal computer, a mobile terminal device, or the like.

A central processing unit (CPU) 71 of the information processing apparatus 70 illustrated in Fig. 5 executes various types of processing in accordance with a program stored in a non-volatile memory unit 74 such as a read only memory (ROM) 72 or, for example, an electrically erasable programmable read-only memory (EEP-ROM), or a program loaded from a storage unit 79 to a random access memory (RAM) 73. The RAM 73 also stores, as appropriate, data and the like necessary for the CPU 71 to execute the various types of processing.

In the CPU 71, a function of performing various types of control and calculation described later is realized by the program.

Note that, as a processor that is separate from the CPU 71, a graphics processing unit (GPU), a general-purpose computing on graphics processing units (GPGPU), an artificial intelligence (AI) processor, or the like may be provided.

The CPU 71, the ROM 72, the RAM 73, and the non-volatile memory unit 74 are connected to one another via a bus 83. Furthermore, an input/output interface 75 is also connected to the bus 83.

An input unit 76 including an operation element or an operation device is connected to the input/output interface 75. For example, as the input unit 76, various operation elements and operation device are assumed such as a keyboard, a mouse, a key, a dial, a touch panel, a touch pad, or a remote controller.

A user operation is detected by the input unit 76, and a signal corresponding to an input operation is interpreted by the CPU 71.

Furthermore, a display unit 77 including a liquid crystal display (LCD), an organic electro-luminescence (EL) panel, and the like, and an audio output unit 78 including a speaker and the like are integrally or separately connected to the input/output interface 75.

The display unit 77 performs various types of display as a user interface. The display unit 77 is implemented as, for example, a display device provided in a housing of the information processing apparatus 70, a separate display device connected to the information processing apparatus 70, or the like.

The display unit 77 executes various kinds of image display on a display screen on the basis of an instruction from the CPU 71. Furthermore, the display unit 77 displays various operation menus, icons, messages and the like, that is, displays as a graphical user interface (GUI) on the basis of an instruction from the CPU 71.

In some cases, the storage unit 79 including a solid state drive (SSD), a hard disk drive (HDD), and the like, and a communication unit 80 including a modem and the like are connected to the input/output interface 75.

The storage unit 79 can be used for storage of various data. Furthermore, a database can be constructed in the storage unit 79.

The communication unit 80 performs communication processing via the network 6.

Furthermore, to the input/output interface 75, as necessary, a drive 82 is connected, and a removable recording medium 81 such as a flash memory, a memory card, a magnetic disk, an optical disk, or a magnetooptical disk is appropriately mounted.

The drive 82 can read a data file such as an image file, various computer programs and the like from the removable recording medium 81. The read data file is stored in the storage unit 79, and images and sounds included in the data file are output by the display unit 77 and the audio output unit 78. Furthermore, the computer programs and the like read from the removable recording medium 81 are installed in the storage unit 79, as necessary.

In the information processing apparatus 70, software can be installed via network communication by the communication unit 80 or the removable recording medium 81. Alternatively, the software may be stored in advance in the ROM 72, the storage unit 79, or the like.

The terminal device 4, the terminal device 3, the server device 1, or the database 2 can be configured by such an information processing apparatus 70. Then, processing related to related content display in the terminal device 4 and processing related to related content generation and editing in the terminal device 3, which will be described later, can be realized by the hardware configuration of the information processing apparatus 70 in Fig. 5 and software installed therein.

### <3. Related Content Generation and Editing>

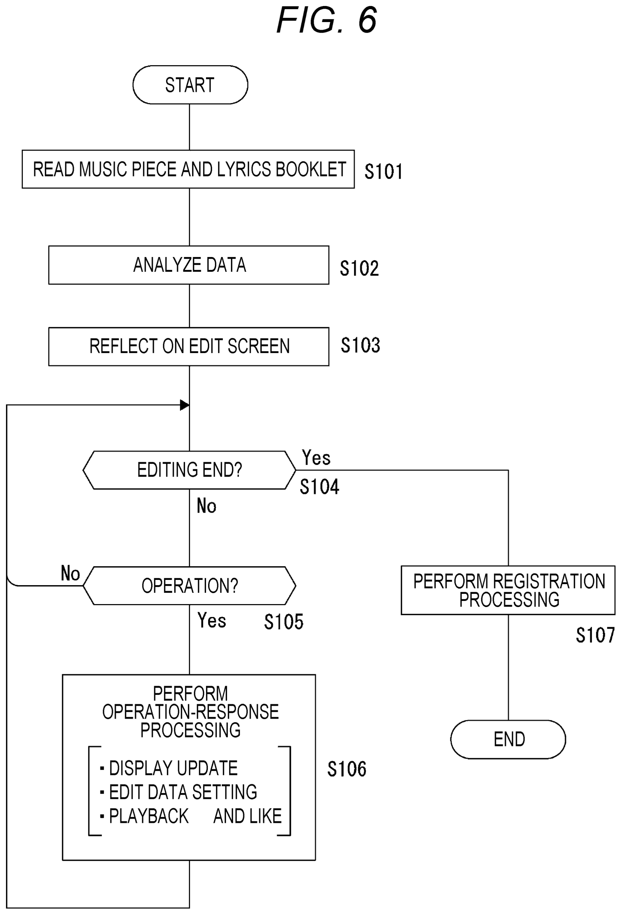

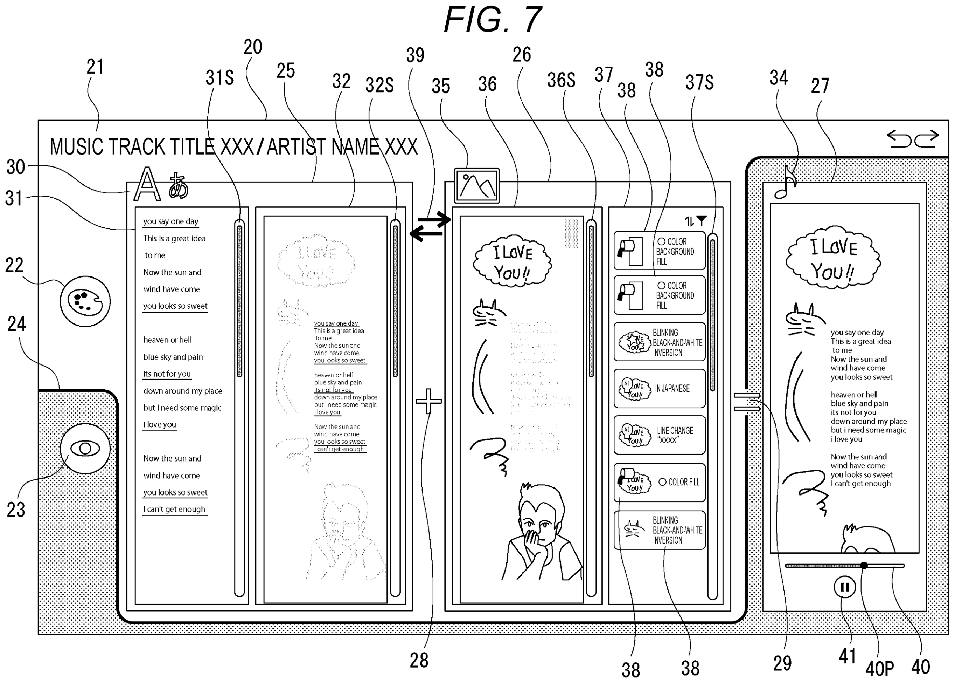

Here, related content generation and editing performed by an artist using the terminal device 3 will be described. Fig. 6 illustrates a processing example of the terminal device 3 at the time of the related content generation and editing, and Figs. 7 to 13 illustrate display screen examples in the terminal device 3. Note that the term "artist" as used herein refers to a person who creates at least a lyrics booklet or the like.

In a case where the artist generates and edits the lyrics booklet or the like as related content, it suffices that an application program as an editing tool is activated in the terminal device 3 and an operation is performed according to guiding of the application program.

First, the artist causes the editing tool to read actual music piece content and lyrics booklet or the like.

Fig. 6 is a processing example of the CPU 71, which is a control unit of the information processing apparatus 70 as the terminal device 3. In particular, this is a processing example of the CPU 71 when the editing tool is activated.

In step S101, the CPU 71 performs processing of reading the music track content and the lyrics booklet or the like to the artist. For example, data of the music piece content and the lyrics booklet or the like selected by the operation of the artist is read as a processing target.

The artist selects, on the editing tool, data of the music piece content or data as the lyrics booklet or the like stored in the storage unit 79, and performs the reading operation. In a case where the lyrics booklet or the like is not prepared as image data, a paper-based lyrics booklet or the like may be scanned and read.

After reading the music piece content and lyrics booklet or the like as an editing target, the CPU 71 analyzes the data of the music piece content and lyrics booklet or the like in step S102, and reflects the result on an edit screen in step S103.

Fig. 7 illustrates an example of an edit screen 20.

On the edit screen 20, the currently displayed music track title and artist name are displayed as a title 21, and an edit mode button 22 and a confirmation mode button 23 are displayed. The edit mode button 22 is an operation element for instructing an edit mode, and the confirmation mode button 23 is an operation element for instructing a confirmation mode.

On the screen, three regions are prepared as a designation box 25, an edit box 26, and a confirmation box 27.

In the example of Fig. 7, a text icon 30 is displayed in the designation box 25 to indicate that the designation box 25 is a box for designating an editing position from the lyrics side. In this case, the designation box 25 is provided with a text presentation area 31 and a corresponding text presentation area 32.

In the text presentation area 31, text data obtained by performing voice recognition on the music piece content read by the CPU 71 is displayed. The display of the text presentation area 31 can be scrolled by a scroll bar 31S.

In the text of lyrics, a part of a phrase portion, which is underlined in the figure, is displayed in a display mode different from that of other portions to be clearly indicated as an edit recommendation portion. A display mode of the edit recommendation portion may be underline as illustrated in the figure, or may be different colors, different fonts, different character sizes, or the like.

In the corresponding text presentation area 32, an image of the read lyrics booklet or the like is displayed. However, here, a character portion in an image of the lyrics booklet or the like is displayed to be dark and conspicuous. The CPU 71 determines a region in which characters of lyrics and the like are written through character recognition in the image of the lyrics booklet or the like, and displays the region in a dark color so as to be conspicuous. Whereas, for example, an image portion of artwork and the like is displayed in a light color so as not to be conspicuous.

The display of the corresponding text presentation area 32 can be scrolled by a scroll bar 32S.

Furthermore, in a lyrics portion in the corresponding text presentation area 32, a part set as the edit recommendation portion in the text presentation area 31 is clearly indicated in a display mode different from other portions. Although the underlined state is illustrated in the example of the figure, a specific color may be overlaid. In the corresponding text presentation area 32, the lyrics display in the lyrics booklet or the like is displayed as an image as it is, and thus, a font and a size of characters are not made different.

In the edit box 26, an image icon 35 is displayed to indicate that the edit box 26 is a box for setting edit details for the image portion. Then, in this case, the edit box 26 is provided with an image presentation area 36 and an edit button area 37.

In the image presentation area 36, an image of the read lyrics booklet or the like is displayed. However, here, in the image of the lyrics booklet or the like, the image portion of artwork and the like is displayed in a dark color to be conspicuous, and the character portion is displayed in a light color not to be conspicuous. The display of the image presentation area 36 can be scrolled by a scroll bar 36S.

In the edit button area 37, various edit buttons 38 are displayed. For example, various types of edit details such as "red background fill", "blue background fill", "blinking black-and-white inversion", "in Japanese", and "line change" are presented as the individual edit buttons 38 together with the editing target portion.

The displayed edit buttons 38 can be scrolled by a scroll bar 37S.

In the confirmation box 27, a music icon 34 is displayed to indicate that the confirmation box 27 is a region in which the edit details can be confirmed together with the music piece playback.

In the confirmation box 27, the lyrics booklet or the like as an edit result is displayed. The user can confirm color change by editing and a state in which an image effect, the animation, and the like are added, along with playback of the music piece.

A progress bar 40 indicates a current position of a music piece being played. The user operates a play/stop button 41 to play and stop the music piece.

Furthermore, the playback position can be changed by moving a pointer 40P of the progress bar 40 by a drag operation or the like.

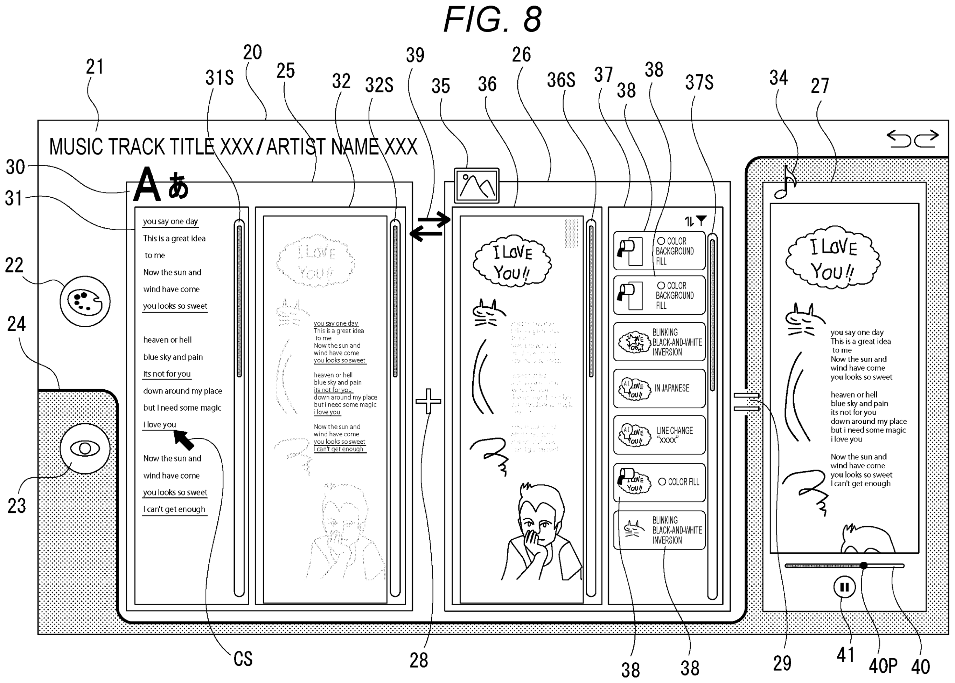

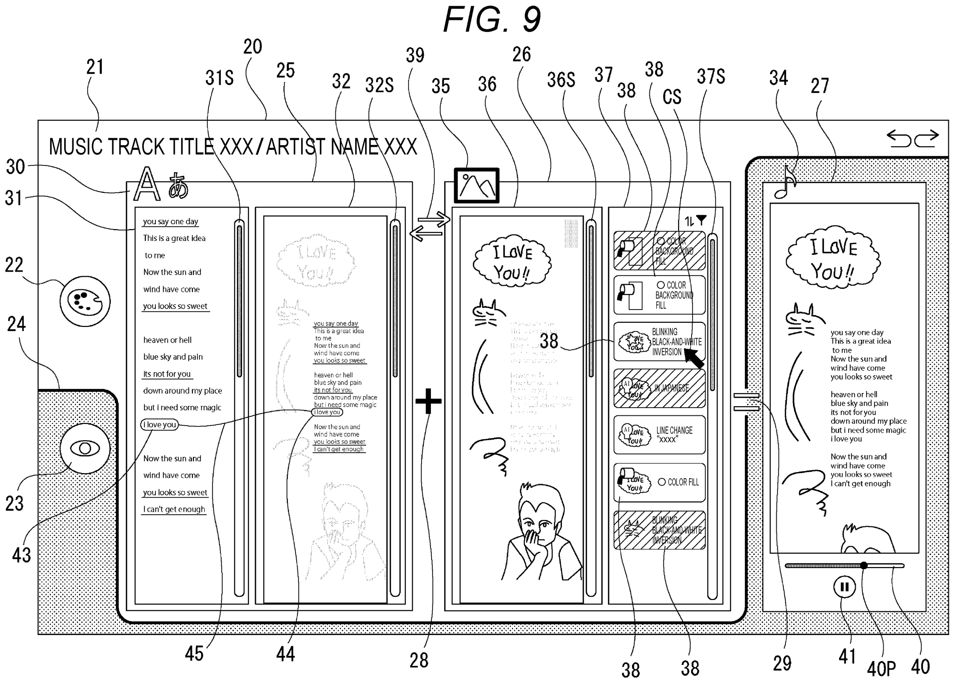

As described above, on the edit screen 20 including the designation box 25, the edit box 26, and the confirmation box 27, the artist can designate a part to be handled for editing by using the designation box 25, determine edit details for the part by operating the edit box 26, and confirm the result by using the confirmation box 27. A plus mark 28 is displayed to indicate that edition in the edit box 26 is added to the designated part in the designation box 25. Furthermore, an equal mark 29 indicates that the result is the content displayed in the confirmation box 27. A display mode of the plus mark 28 and the equal mark 29 is changed according to progress of editing, and the progress of editing is presented to the artist. For example, the plus mark 28 is white (light color) in Figs. 7 and 8, but is black (dark color) in Fig. 9.

Note that the example of Fig. 7 is an example of a state in which the edit part is designated in the text of the lyrics in the designation box 25 and the effect on the image is added in the edit box 26, but the text and the image can be exchanged by a left-right conversion button 39.

That is, it is also possible to designate any part in the image of the artwork and the like in the designation box 25, and determine the edit details of the lyrics text in the edit box 26.

Furthermore, a mode boundary line 24 visually clearly indicates whether the mode is the edit mode or the confirmation mode for each area.

The example of Fig. 7 illustrates a state in which the designation box 25 and the edit box 26 are set upward by the mode boundary line 24, and the artist is performing editing using the designation box 25 and the edit box 26. In this case, for example, there is a distinction between the upper side displayed bright by the mode boundary line 24 and the lower side displayed dark, for example, indicating that the designation box 25 and the edit box 26 are functioning in the edit mode and that the confirmation box 27 is functioning in the confirmation mode.

A position where the mode boundary line 24 is drawn is changed according to a mode selection state or the like.

In order to perform the display as described above in step S103 of Fig. 6, the CPU 71 of the terminal device 3 performs the following processing as the data analysis in step S102.

First, the CPU 71 performs voice recognition processing (text data generation processing of lyrics) on the music piece content, for text display in the text presentation area 31.

Furthermore, the CPU 71 performs processing of determining a character region and an image region in an image of the read lyrics booklet or the like, for display in the corresponding text presentation area 32 or the image presentation area 36.

Furthermore, the CPU 71 performs processing of setting the edit recommendation portion to be presented on the text in the text presentation area 31. That is, as a phrase of the music piece or lyrics, a portion recommended to add editing such as an image effect is set. For example, by AI processing based on learning of effect setting for a large number of pieces of music piece content, a part where presentation such as blinking, animation, and color change is effective is searched, and the part is set as the edit recommendation portion.

Furthermore, the CPU 71 also performs processing of setting what kind of edit details are appropriate for each edit recommendation portion.

By performing the processing of these, in step S103, the display as illustrated in Fig. 7 can be performed corresponding to the image of the read music piece content and lyrics booklet or the like.

The CPU 71 monitors an editing end operation in step S104 of Fig. 6, and monitors various operations on the edit screen 20 in step S105.

In a case where the operation on the edit screen 20 is detected, the CPU 71 performs processing corresponding to the operation in step S106. Specifically, in response to the operation, the CPU 71 performs control to update of the display state of the edit screen 20, edit data setting, playback of music piece content, and the like.

The editing work on the lyrics booklet or the like realized by the operation performed in steps S105 and S106 and the processing corresponding thereto will be specifically described.

In a state where the edit screen 20 is displayed as illustrated in Fig. 7, the artist selects a part desired to be edited from the edit recommendation portion (portion with an underline) shown in the text presentation area 31 of the designation box 25. For example, Fig. 8 illustrates a state in which the artist performs an operation of designating a phrase portion "I love you" in the edit recommendation portion of the lyrics with the cursor CS.

In a case where the operation of designating the edit recommendation portion is detected in this manner, the CPU 71 updates the display state as illustrated in Fig. 9 accordingly.

First, the edit recommendation portion designated in the text presentation area 31 is clearly indicated in the corresponding text presentation area 32. That is, in the image of the lyrics booklet or the like, similarly, a portion of "I love you" is clearly indicated. For example, as illustrated in the figure, display is performed in which a selected portion is indicated by a target frame 43 in the text presentation area 31 and a target frame 44 in the corresponding text presentation area 32, and these are connected by a line 45. As a result, the artist can easily check which part in the image of the lyrics booklet or the like the selected edit recommendation portion corresponds to.

Note that the artist may be able to designate the edit recommendation portion from the corresponding text presentation area 32. In this case, the edit recommendation portion designated in the corresponding text presentation area 32 is clearly indicated in the text presentation area 31, and the display state as illustrated in Fig. 9 is obtained.

Then, on the edit box 26 side, the edit button 38 corresponding to the selected edit recommendation portion is displayed. For example, among the plurality of edit buttons 38, an edit button 38 suitable for the selected edit recommendation portion is displayed to be in an active state, and an unsuitable edit button 38 is displayed to be in an inactive state. As a result, candidates of the effect suitable for the edit recommendation portion (such as blinking black-and-white inversion) are clearly indicated to the artist, and simultaneously, the effect not recommended for the edit recommendation portion designated in the text presentation area 31 is clearly indicated as the inactive state. Therefore, the artist can examine the effect applicable to the current designated position while comprehensively viewing the entire effect applicable to the entire music track.

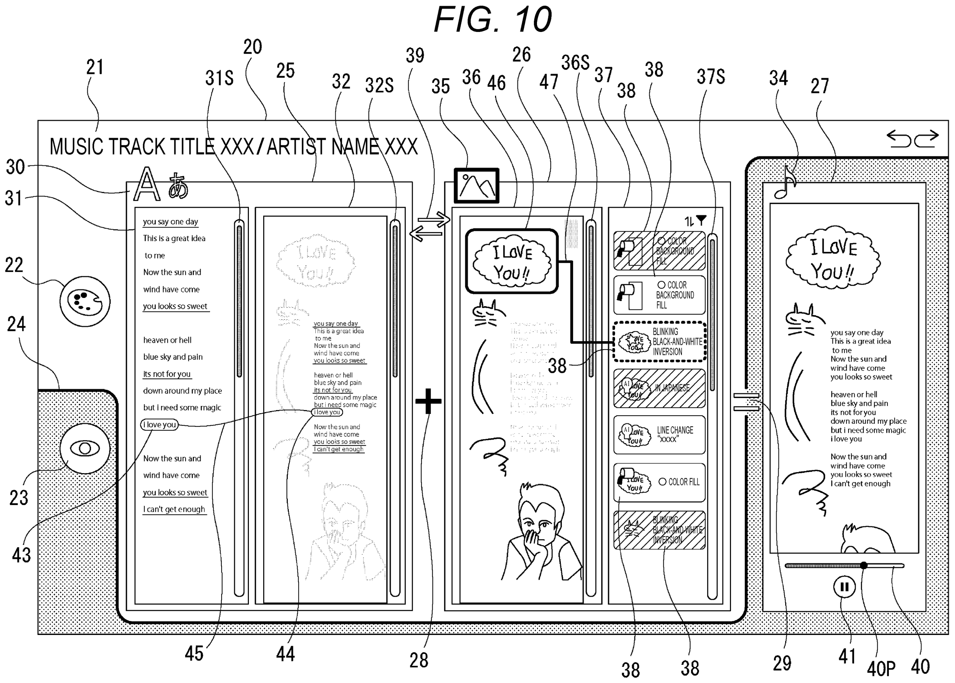

The artist selects the active edit button 38 with a cursor CS. Fig. 9 illustrates a state in which the edit button 38 of blinking black-and-white inversion is selected for the image in which "I love you" is designed. In response to this selection operation, the edit button 38 operated is highlighted as illustrated in Fig. 10, and the corresponding image portion is indicated by a target frame 46, and these are connected by a line 47. That is, the fact is indicated in which blinking black-and-white inversion is set for the image portion indicated by the target frame 46.

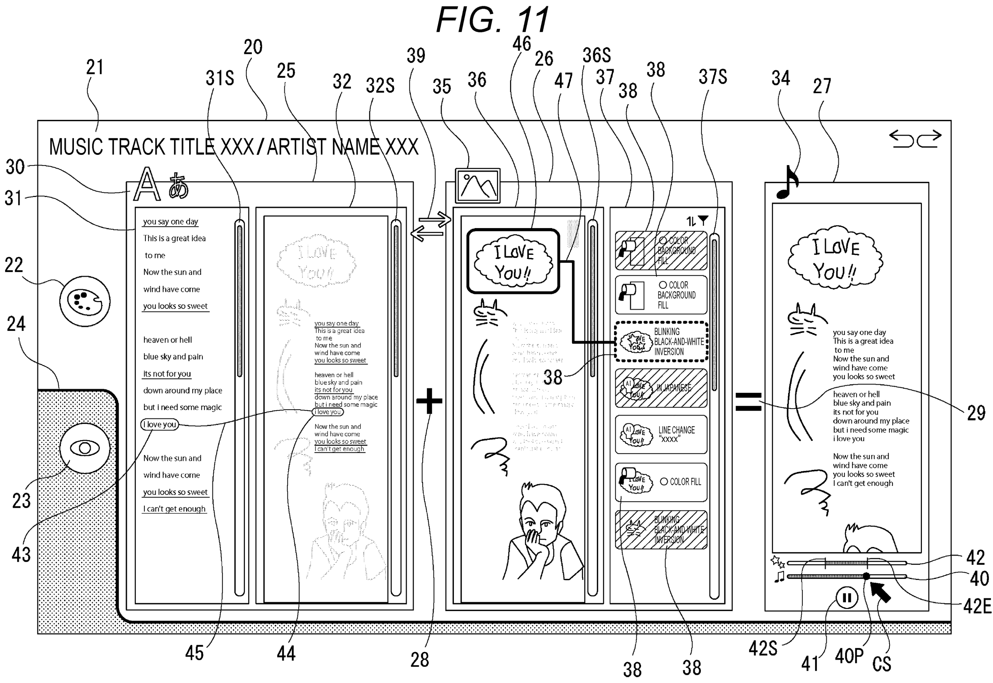

Moreover, as a result of these, editing in the confirmation box 27 is enabled as illustrated in Fig. 11. That is, the mode boundary line 24 is changed, and it is clearly indicated that the confirmation box 27 functions in the edit mode. At this time, in the confirmation box 27, an adjustment bar 42 is displayed along the progress bar 40. This adjustment bar 42 sets a period during which blinking black-and-white inversion is executed for the image portion indicated by the target frame 46 during music piece playback. In an initial state, a section recommended by the CPU 71 is indicated by a start position 42S and an end position 42E, and a width with a slight margin before and after the recommended section is indicated as a length of the entire adjustment bar 42. That is, for the period in which blinking black-and-white inversion is executed for the image portion indicated by the target frame 46, the CPU 71 estimates a recommended position estimated to be appropriate and a position with a margin allowing the artist to freely adjust the position before and after the recommended position, and the CPU 71 clearly indicates the recommended position on the progress bar 40 and the adjustment bar 42.

When the user starts the music piece playback by using the play/stop button 41, the user can confirm that the corresponding image portion is displayed in a blinking manner in the section indicated by the adjustment bar 42 using the confirmation box 27.

Furthermore, the artist may desire to finely adjust the blinking display section in accordance with the progress of the music track. In this case, the artist can adjust the blinking display section by moving the start position 42S or the end position 42E by a drag operation or the like.

For example, as described above, the artist designates a part where certain editing or effect addition is desired in the edit recommendation portion presented in the designation box 25, and determines details of the editing/effect in the edit box 26. Furthermore, the effect section in the music piece can be adjusted through the confirmation box 27 as necessary.

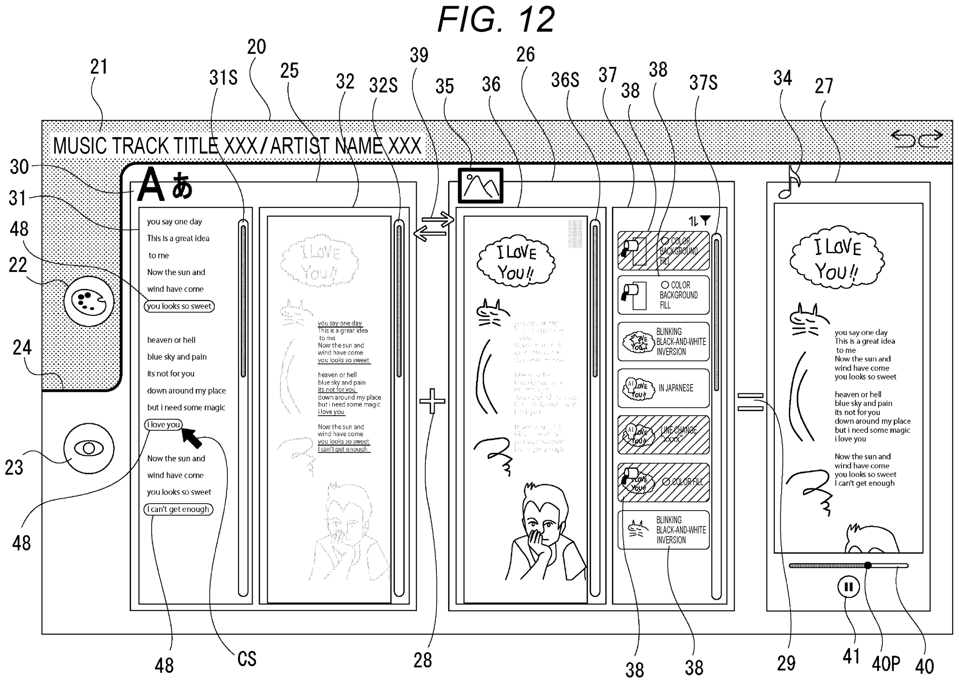

Fig. 12 illustrates a state in which the artist operates the confirmation mode button 23 to set the confirmation mode entirely. In this case, for example, the lower side of the mode boundary line 24 is displayed brighter, and the upper side is displayed darker. This display indicates that the designation box 25, the edit box 26, and the confirmation box 27 function in the confirmation mode.

In the designation box 25, in the case where the confirmation mode is set, in the text presentation area 31, a portion that has been subjected to edit setting so far is clearly indicated by a confirmation frame 48. Here, the confirmation frame 48 is clearly indicated in this example, but it is sufficient that distinguishment from other portions can be clearly indicated with some display mode. Furthermore, also in the corresponding text presentation area 32, a portion that has been subjected to edit setting is clearly indicated. In the figure, the indication is made using an underline.

As a result, the artist can confirm a part that has already been subjected to edit setting.

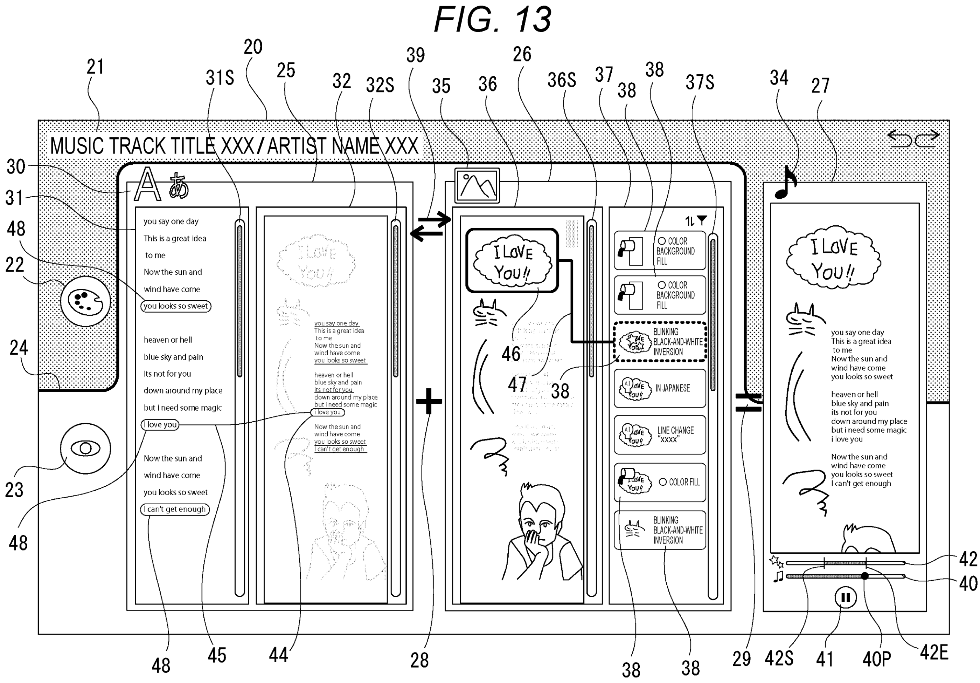

Furthermore, details of the setting of the individual confirmation frames 48 are displayed by selecting the confirmation frame 48. For example, when the confirmation frame 48 which is the cursor CS is clicked as illustrated in Fig. 12, details of the setting for the confirmation frame 48 are illustrated as illustrated in Fig. 13. First, the target frame 44 corresponding to the confirmation frame 48 is shown and linked by the line 45, so that a target portion of the lyrics booklet or the like is clearly indicated.

Furthermore, in the edit box 26, the edit button 38 of the edit details set for the portion of the confirmation frame 48 is highlighted, and is connected to the target frame 46 by the line 47. As a result, the part as the editing target and the edit details such as the set image effect are clearly indicated.

Furthermore, in the edit details indicated in this manner, in a case where a section is also set as in the blinking display effect, the adjustment bar 42 is displayed in the confirmation box 27 to indicate the section for executing the effect.

In this case, it is preferable that the section can be adjusted also at this time point. Therefore, the mode boundary line 24 is changed, and the confirmation box 27 is set to a state in which the mode boundary line 24 passes through a center of the confirmation box 27 such that the confirmation box 27 is in both the confirmation mode and the edit mode.

The user can also adjust the section as the editing target by moving the start position 42S or the end position 42E of the adjustment bar 42.

In steps S105 and S106 of Fig. 6, as described above, the CPU 71 of the terminal device 3 detects an operation as the user interface and executes the processing corresponding thereto.

When the artist performs an editing end operation, the CPU 71 proceeds from step S104 to step S107 and performs registration processing. That is, data of the lyrics booklet or the like including information related to the set edit details is uploaded to the server device 1 as related content.

As a result, the server device 1 can provide the related content edited by the artist to the user in association with the music piece content.

Note that the above example of the edit screen 20 is a display example on a horizontally long screen such as a PC, but an edit screen 20 suitable for a case of a vertically long screen in a smartphone or the like is also assumed. Also in this case, it suffices that a screen layout or the like that allows easy designation, editing, confirmation, and the like of the editing position is performed.

### <4. Related Content Display>

### [Display Example of Icons and the like for User Interface]

Hereinafter, a case will be described in which the user causes the terminal device 4 to play music piece content and browses a lyrics booklet or the like of related content.

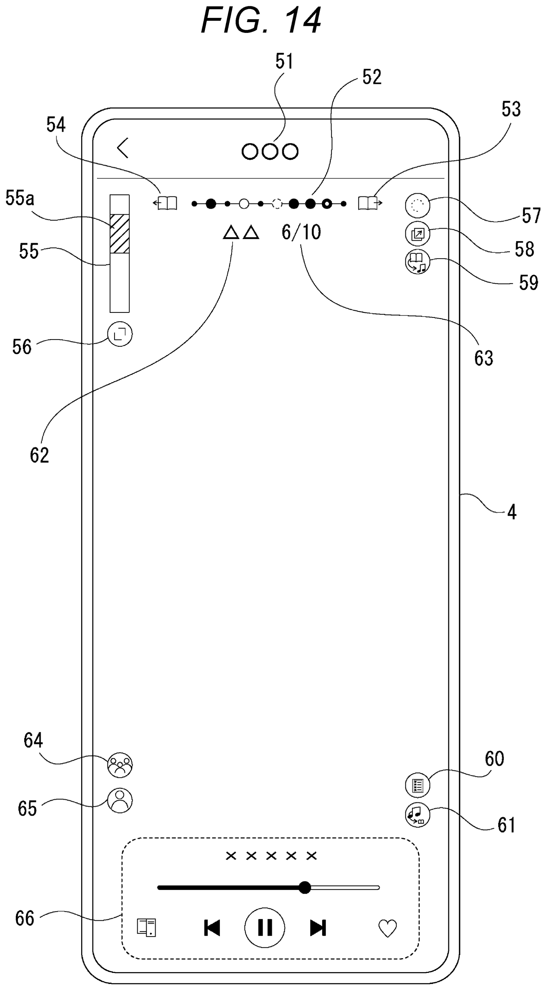

As illustrated in Fig. 4, the terminal device 4 displays the image of the lyrics booklet or the like and displays icons and the like for various user interfaces. Fig. 14 illustrates only the icons and the like excluding the image of the lyrics booklet or the like.

As the icons and the like for the user interfaces, an album title 51, a page guide 52, a page turn icon 53, a page return icon 54, a display position guide 55, a full-page focus icon 56, a reversing icon 57, a link icon 58, synchronization icons 59 and 61, a highlight icon 60, a track title 62 corresponding to the currently browsed page, a page number 63, sharing-mode icons 64 and 65, an audio control 66, and the like are displayed. Note that these are examples, and it is not necessary to display all of them. Furthermore, icons and the like other than these may be displayed.

As the album title 51, a title of a music album as the music piece content being played is displayed. Note that, without limiting to the album title, a music track title may be displayed when music of one music track with the music title is played, or both the album title and the title of the music piece being played may be displayed. Moreover, an artist name or the like may be displayed. A thumbnail image of the music album or the artist may be displayed.

The page guide 52 is display for clear indication and the like of a page being displayed in the entire lyrics booklet or the like as the related content. Assuming a lyrics booklet including a plurality of pages, a lyrics sheet including two front and back pages of a paper sheet, and the like, the page guide 52 presents which page the page being displayed is, to the user. Details of the page guide 52 will be described later.

The page turn icon 53 is an operation element for performing an operation of advancing a page being browsed by the user. The page return icon 54 is an operation element for performing an operation of returning the page being browsed by the user.

The display position guide 55 is display indicating a displayed position in one page of the related content (the lyrics booklet or the like).

For example, when the entire one page is not displayed on the screen of the terminal device 4 such as a smartphone, the entire page and a display range are clearly indicated. Fig. 14 illustrates an example indicating that a range (area 55a) indicated by a hatched portion is currently displayed in the vertically long page.

As the track title 62, a title of a music piece whose lyrics are currently displayed is displayed.

Note that not only the title of the music piece but also a lyricist, a composer, an arranger, or the like may be displayed as music piece information.

Note that the title of the music piece being played may be separately displayed.

As the page number 63, the page number being browsed in the lyrics booklet or the like is displayed. For example, for example, in a case of the sixth page in the total number of pages (for example, 10 pages), "6/10" is displayed as a fraction.

The full-page focus icon 56 is an operation element for performing full-page display, that is, focusing in a default size in which a page of the lyrics booklet or the like is most easily viewed.

The reversing icon 57 is an operation element for reversing the lyrics sheet. As the reversing function, there is a function in which an additional element on the back side is provided in a certain one page by using a display method such as a pop-up. Such an element on the back side is displayed by operating the reversing icon 57.

The link icon 58 is a link button to an external website.

The synchronization icons 59 and 61 are operation elements for synchronizing a playback position of a music piece with a currently browsed page of the lyrics booklet or the like. The synchronization icon 59 is an operation element for changing the playback position of the music piece so as to match the currently browsed position of the lyrics booklet or the like, and the synchronization icon 61 is an operation element for changing the currently browsed position of the lyrics booklet or the like so as to match the playback position of the music piece.

The highlight icon 60 is an operation element for a highlight mode for displaying the lyrics booklet or the like.

The sharing-mode icons 64 and 65 are operation elements for a sharing mode of sharing with other users or the artist.

Various operation elements related to playback of music piece content are prepared as the audio control 66. For example, a play/stop button, and a forward button, a reversing button, a favorite button, a progress bar, and the like of the playback music piece are displayed.

Hereinafter, various functions provided to the user on such a screen of the terminal device 4 will be described.

### [Content Centric Mode]

A content centric mode is a mode in which the user interfaces are deleted and the lyrics booklet or the like is displayed in front so that the user can browse the lyrics booklet or the like with focus.

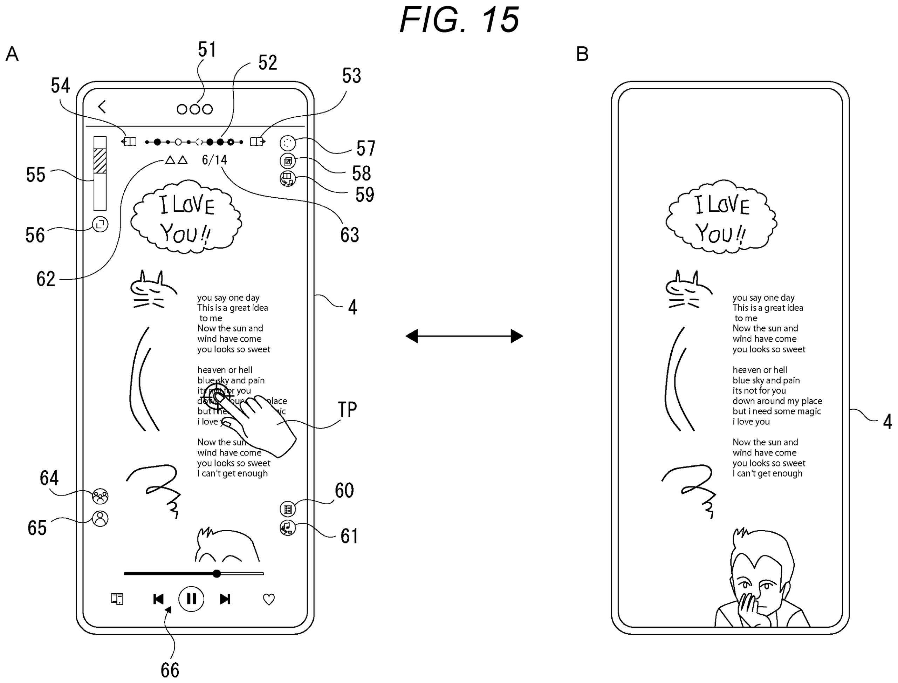

For example, Fig. 15A illustrates a display state in a normal display mode. The icons and the like for the various user interfaces described in Fig. 14 are displayed for the image of the lyrics booklet or the like.

In this case, when the user performs a predetermined operation, for example, a tap operation TP or the like at any position (a position where no icons and the like are displayed) on the screen, or when predetermined time elapses without the user performing any operation, the CPU 71 which is a control unit of the terminal device 4 performs control to erase the icons and the like and display only the lyrics booklet or the like (display in the content centric mode) as illustrated in Fig. 15B.

By doing this way, the user can browse the lyrics booklet or the like in a state equivalent to that on a paper sheet.

Note that, in response to the user performing a predetermined operation such as a tap operation on the screen of Fig. 15B, the CPU 71 performs control to return to the display in the normal display mode of Fig. 15A.

### [Full-Page Focus]

By the user operating the full-page focus icon 56, the CPU 71 of the terminal device 4 performs full-surface focus control.

For example, during display in the state of Fig. 15A or Fig. 15B, the user can reduce or enlarge the image of the lyrics booklet or the like by performing a pinchin/out operation on the screen.

When the screen operation is freely performed in this way, the user may not know in what enlargement/reduction state of the page of the lyrics booklet or the like the user is browsing at the moment. Therefore, the full-page focus icon 56 is prepared, and when the user operates the full-page focus icon, the CPU 71 performs control to return the focus to the default size in which the page of the lyrics booklet or the like is most easily viewed. That is, the page is returned to a state of the image size displayed first on the page.

Note that, for this reason, the full-page focus icon 56 may be displayed at all times, but may preferably be displayed only when the screen display is no longer in the default size due to a user's pinch operation or the like.

Furthermore, the full-page focus icon 56 is an operation element for returning from the enlargement/reduction state to the default size as described above, but the display position may be controlled at the same time. For example, a case is considered in which, while the user can also move the display region by a drag operation or a flick operation on the screen, for example, the first display position of the current page is returned in response to the operation of the full-page focus icon 56. Alternatively, an icon for such an operation may be separately provided.

### [Display Position Guide of Lyrics Booklet or the Like]

The display position guide 55 indicates a displayed position within the page of the lyrics booklet or the like.

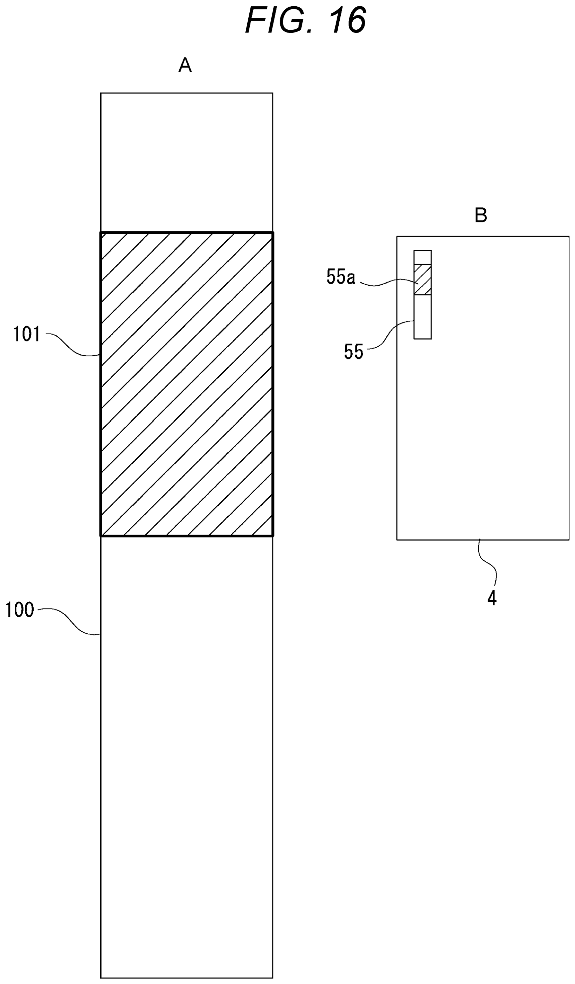

For example, Fig. 16A illustrates an entire page 100 of the page of the lyrics booklet or the like. Here, a vertically long page created in accordance with a smartphone is assumed.

Then, it is assumed that a range of a hatched thick line frame is a display range 101 actually displayed on the screen. This state is presented to the user by the display position guide 55.

Note that such a type of vertically long page shape suitable for a smartphone will be referred to as a standard type for the sake of description.

Fig. 16B illustrates a display screen of the terminal device 4 as illustrated in Fig. 15A. However, only the display position guide 55 is illustrated. In the case illustrated in Fig. 16A described above, as illustrated in Fig. 16B, it is assumed that the entire display position guide 55 corresponds to the entire page 100, and the current display range 101 is clearly indicated by the area 55a indicated by a hatched portion therein. Note that, in practice, the area 55a may simply be clearly indicated in a specific color or the like.

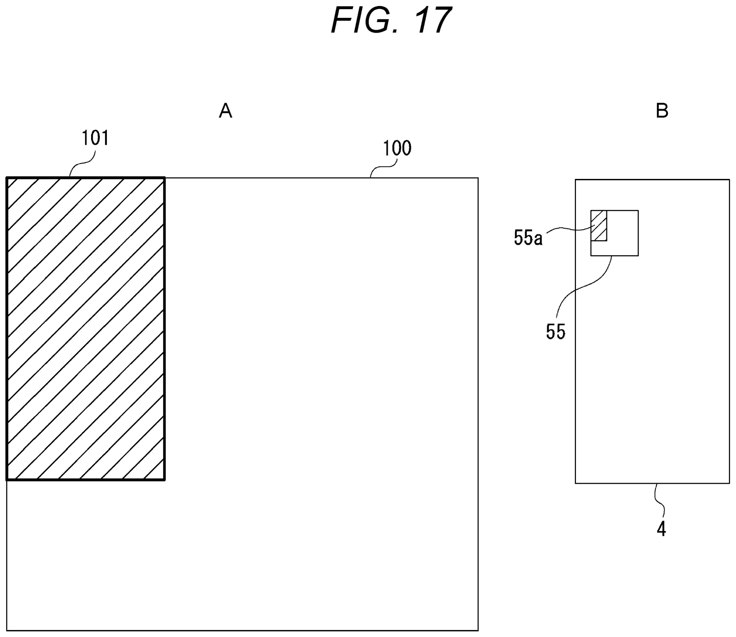

Fig. 17A illustrates a case where the page shape is not vertically long according to a smartphone. For example, this is a case where the entire page 100 is in a state close to a square. It is assumed that the display range 101 is an upper left portion in the page as illustrated with respect to the entire page 100. In this case, the display position guide 55 has a shape expressing the entire page 100 as illustrated in Fig. 17B, and the area 55a expressing the display range 101 is clearly indicated therein as indicated by a hatched portion.

Note that such a page shape that is not the standard type is referred to as arbitrary shape type for the sake of description. In the arbitrary shape type, a shape is set when the artist generates and edits the lyrics booklet or the like, for example.

In Figs. 16B and 17B, the position of the area 55a is changed in the display position guide 55 in accordance with a change of the display range by a scroll operation or a drag operation of the user.

Furthermore, the size of the area 55a in the display position guide 55 is changed according to enlargement/reduction by a pinch operation of the user.

By displaying the display position guide 55 in this manner, the user can easily recognize the shape of the page and the current display range in the page among the lyrics booklet or the like having various page shapes. This configuration serves as a useful guide for browsing on a screen with a limited area such as a smartphone.

Note that the display position guide 55 may be used as an operation element for moving the display range. For example, in Fig. 16B, the display range of the lyrics booklet or the like on the screen is scrolled up or down by an operation of moving the area 55a up or down. Furthermore, in the case of Fig. 17B, by moving the position of the area 55a in any direction, the display range of the lyrics booklet or the like on the screen is moved in that direction.

The display position guide 55 may be always displayed, or may be displayed in response to some operation.

For example, in a case where the lyrics booklet or the like is the standard type as illustrated in Fig. 16A, the display position guide 55 is displayed in response to an up/down scroll operation, and the area 55a is moved. When scrolling is not performed, the display position guide 55 is erased.

Furthermore, in a case where the lyrics booklet or the like is of the arbitrary shape type as illustrated in Fig. 17A, the display position guide 55 is displayed in response to a scroll operation or an enlargement/reduction operation in all directions, and the area 55a is moved, enlarged, or reduced in response to the scroll operation or the enlargement/reduction operation. When the scroll operation or the enlargement/reduction operation is not performed, the display position guide 55 is erased.

Since the display position guide 55 is assumed to use a relatively wider region than other icons, it is possible to make it difficult to interfere with the display of the lyrics booklet or the like, by displaying the display position guide 55 only at the time of operation as described above

### [Automatic Determination of Default Position in Display Position Guide]

A description is given to a function of automatically determining a range to be displayed first by the CPU 71 of the terminal device 4 in a case where the page shape of the lyrics booklet or the like is the arbitrary shape type.

That is, the CPU 71 determines, for each page, a default position at which the lyrics are most easily viewed when the page of the lyrics booklet or the like is first displayed.

For example, the CPU 71 determines how the lyrics are displayed for each page of the lyrics booklet or the like, and sets the default position.

In a case where the lyrics are written in N columns in one page, the CPU 71 determines the number of columns of a block of the lyrics portion, and sets the default position on the basis of a size adjusted to a width of one column closest to the upper left.

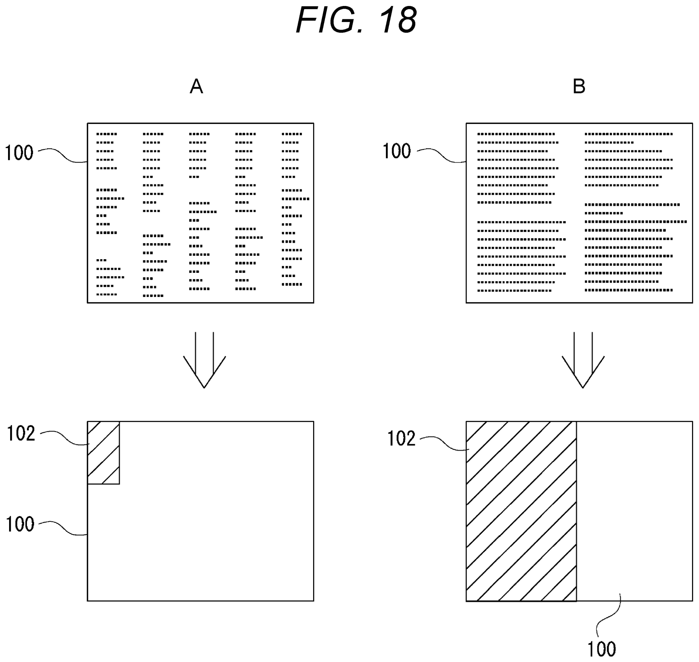

Figs. 18A and 18B illustrate an example in which lyrics are placed in a plurality of columns in the entire page 100. A default position 102 can be set by adjusting the size to the width of one column closest to the upper left.

However, there are various ways of writing lyrics, and the lyrics are not necessarily written in an orderly manner in units of columns. In some cases, characters are written obliquely.

In such a case, for example, the following is applied.

A screen size accommodating a set of lyrics is set.

In a case where the smallest character falls below a predetermined font size when the screen size is set to the screen size accommodating the set of lyrics, a screen size according to the predetermined font size is set.

Then, on the basis of the screen size set in this manner, a default position in the page is set.

Note that, in the editing stage, the artist may be able to designate a default position to be displayed first in the page.

### [Display of Text Position]

In the display position guide 55, at which position in the current page the lyrics (text) are displayed is clearly indicated.

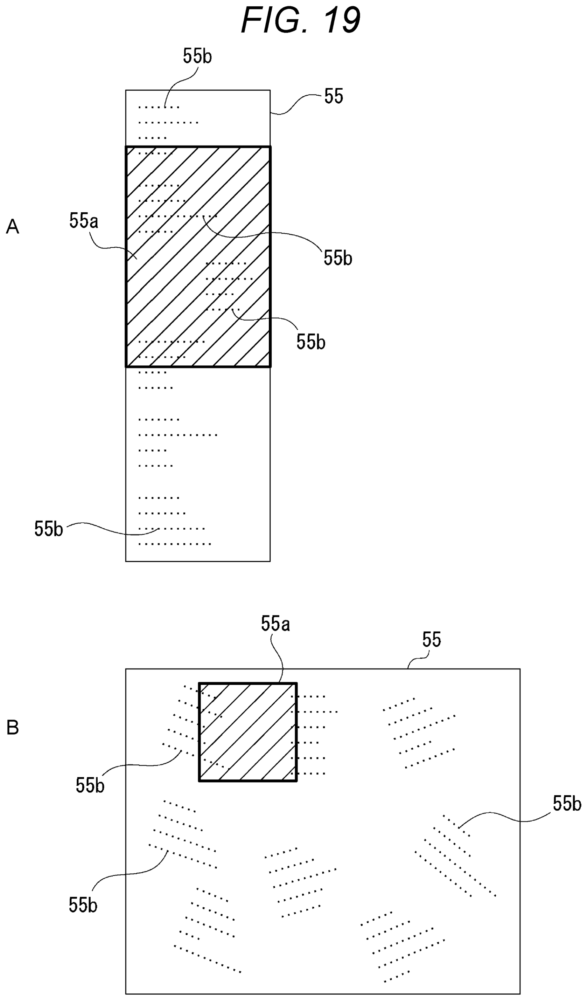

Figs. 19A and 19B illustrate examples. In the display position guide 55, a text position marker 55b is displayed as indicated by "···" in the figure. This text position marker 55b indicates a location where characters are actually written in the page. A display mode of the text position marker 55b may be any display mode as long as the position of the text can be known.

Upon reading the lyrics booklet or the like to be displayed, the CPU 71 analyzes an image of each page to determine the text display position. As a result, the text position marker 55b as illustrated in Figs. 19A and 19B can be displayed for each page to be displayed.

By displaying such a text position marker 55b in the display position guide 55, the user can easily recognize where to scroll and the like when the user desires to read the lyrics.

### [Page Navigation of Lyrics Booklet or the Like]

The user is enabled to easily recognize a page, for the displayed lyrics booklet or the like. For this purpose, the page guide 52 is displayed as illustrated in Fig. 14.

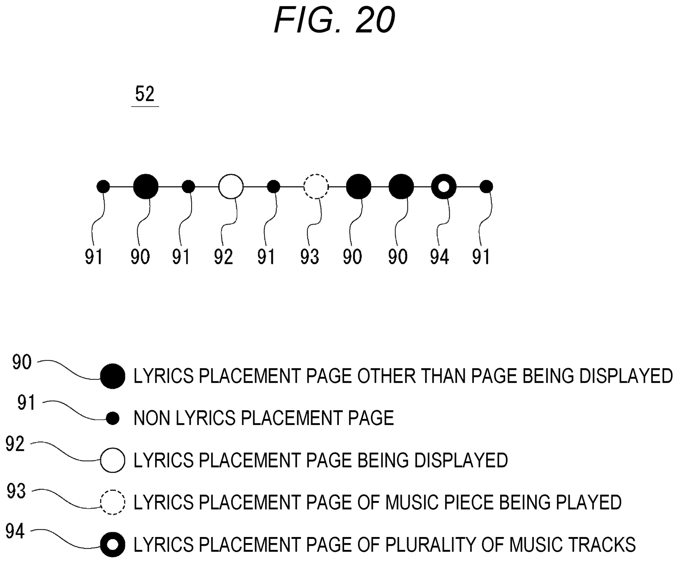

An example of the page guide 52 is illustrated in an enlarged manner in Fig. 20.

In the page guide 52 of this example, one page of the lyrics booklet or the like is expressed by circular marks 90, 91, 92, 93, and 94, and a property of the page is indicated by a difference in a circular display mode. Although it is merely an example, the following is performed.

First, whether to be a lyrics placement page or a page on which no lyrics are placed is indicated by a difference in size of the circle. For example, it is assumed that the small circular mark 91 indicates a non lyrics placement page. Then, the large circular marks 90, 92, 93, and 94 indicate lyrics placement pages.

The following properties are displayed for the lyrics placement page.

The mark 90 indicates a lyrics placement page other than the currently displayed page.

The mark 92 indicates a lyrics placement page currently displayed.

The mark 93 indicates a lyrics placement page on which lyrics of a currently played music piece are placed.

The mark 94 indicates a lyrics placement page on which lyrics of a plurality of music pieces are placed.

Note that, in a case where the currently displayed lyrics are the lyrics of the currently played music piece, a mark obtained by combining the marks 92 and 93 is considered.

In the figure, each mark is illustrated as a black circle, a white circle, a broken line circle, a ring shape, or the like, but this is for the sake of distinguishment in the description. For example, it suffices that each mark is expressed by a difference in color, luminance, gradation, highlight method, blinking/lighting, or the like.

In a case where the user browses the lyrics booklet or the like while playing a music piece, the user does not necessarily view only the lyrics of the music piece being played. The user can optionally scroll within the page or transition to another page. Then, there are the following cases.
- While the user is away from the lyrics placement page of the music piece being played, the user desires to transition to the lyrics placement page of the music piece being played.
- The user desires to view a page of only artwork.
- The user desires to know how many lyrics are placed on which page.
- The user desires to know which page is currently browsed in the whole.
- The user desires to know what kind of page is present before and after the currently browsed page.
- The user desires to know which one of forward and backward directions from the current page the target page is in.

For example, in the cases above, the function of distinguishably guiding each page with the page guide 52 is very convenient for the user.

Furthermore, the function also serves as a guide when it is difficult to know which of the page turn icon 53 and the page return icon 54 should be operated.

Note that the marks 90, 91, 92, 93, and 94 may be operation elements for directly transitioning to the page.

Furthermore, various presentation examples of the properties of the page can be considered. For example, a text placement page may be presented regardless of whether or not to be lyrics. Furthermore, such presentation that a text placement page, an artwork placement page, and a text/artist mixed page can be identified may be performed.

Moreover, such presentation that a lyrics placement page, a music-list placement page, a credit placement page, a non lyrics placement page currently displayed, and the like can be identified may be performed.

The mark 92 indicating the currently displayed page may be applied regardless of whether the lyrics are placed or not.

Furthermore, in the mark 94 indicating a lyrics placement page on which lyrics of a plurality of music pieces are placed, a number indicating the number of the placed music pieces may be displayed.

The page guide 52 may be displayed at all times, but the display may be made to appear in response to some operation. For example, there is also an example in which the display of the page guide 52 is turned off when the lyrics placement page of the music piece being played is displayed, and the page guide 52 is displayed when the page transitions to a page different from the lyrics placement page of the music piece being played.

### [Navigation of Page Number Being Displayed]

The currently displayed page among all the pages is displayed as the page number 63. However, there is a case where a page notation is given in the lyrics booklet or the like itself, and in this case, it is less necessary to display the page number 63.

Therefore, the display of the page number 63 is executed when the page notation is not shown on the display of the lyrics booklet or the like. As a result, the user can easily check the current page number.

Note that the presence or absence of the page notation in the lyrics booklet or the like may be considered as the presence or absence of page notation within the currently displayed range. For example, there is an example in which, even if there is the page notation on the current page in the lyrics booklet or the like, if the page notation does not appear in the currently displayed range on the page, the page number 63 is displayed. By doing this way, the user can always confirm what page the user is currently browsing by either page number 63 or the notation on the lyrics booklet itself.

### [Synchronization Function]

As a request of the user, the user may desire to listen to a music piece of lyrics after looking at the lyrics, or may desire to see lyrics of a music piece while listening to the music piece.

Therefore, a synchronization function is prepared, and the synchronization icons 59 and 61 are displayed.

When the synchronization icon 59 is operated, the CPU 71 performs control to change the playback position of the music piece so as to match the currently browsed position of the lyrics booklet or the like. For example, the CPU 71 causes playback of the music piece whose lyrics are placed on the currently displayed page.

In this case, the following control example of the CPU 71 is conceivable.
- In a case where lyrics of one music track are placed on the currently displayed page, the corresponding music piece is played from the beginning of the music track in response to an operation of the synchronization icon 59.
- In a case where lyrics of one music track are placed on the currently displayed page and a part of the lyrics is displayed, the corresponding music piece is played from the position of the displayed lyrics, in response to an operation of the synchronization icon 59.
- In a case where lyrics of one music track are placed on the currently displayed page but the lyrics portion is not displayed, the corresponding music piece is played from the beginning of the music track in response to an operation of the synchronization icon 59.
- In a case where lyrics of a plurality of music tracks are placed on the currently displayed page, the first music piece is played from the beginning of the music track in the order of placed lyrics in the page, in response to an operation of the synchronization icon 59.
- In a case where lyrics of a plurality of music tracks are placed on the currently displayed page, the corresponding music piece whose lyrics are currently displayed is played from the beginning of the music track in response to an operation of the synchronization icon 59.
- In a case that lyrics of a plurality of music tracks are placed on the currently displayed page and lyrics of a plurality of music tracks appear on the display, one of the lyrics is selected from an upper position on the display or selected according to a displayed size or the like, and the selected music piece is played from the beginning of the music track or the beginning of the displayed range.
- In a case where a certain portion (phrase) is designated on the lyrics display by a touch operation or the like and then an operation of the synchronization icon 59 is performed, the corresponding music piece is played from a position of the designated phrase. A certain portion on the lyrics display may be specified by the user's line-of-sight detection, and the music piece may be played from a position corresponding to the specified portion in response to an operation of the synchronization icon 59.

Although the above is an example of control, there are various processing methods for synchronously controlling a playback position of a music piece on the basis of displayed lyrics as described above.

Furthermore, control details may be made different according to an operation mode, for example, a one-tap operation on the synchronization icon 59 causes playback of the music piece in synchronization with the current location (phrase), and a long tap (long press) operation causes playback of the music piece from the beginning of the music piece corresponding to the page being displayed.

Furthermore, instead of the operation of the synchronization icon 59, the music piece may be played from the position by a tap operation or the like on the displayed lyrics portion.

In this case, the music piece may be played in synchronization with a location (phrase) by a one-tap operation on the lyrics portion, and may be played from the beginning of the music piece by a long-tap operation.

Note that, preferably, the synchronization icon 59 is displayed while the lyrics placement page is displayed, and is not displayed in the non lyrics placement page. This is because the lyrics are not displayed on the non lyrics placement page and there is no music piece to be synchronized.

Next, in response to an operation of another synchronization icon 61, the CPU 71 performs processing of synchronizing the lyrics display with the music piece being played.

In this case, the following control example of the CPU 71 is conceivable.
- The beginning of the lyrics placement page of the music piece being played is displayed.
- In the lyrics placement page of the music piece being played, the lyrics are displayed from the beginning of the lyrics.
- In the lyrics placement page of the music piece being played, the lyrics are displayed from the position of the lyrics corresponding to the phrase being played.

These controls may be switched according to an operation mode.

For example, a one-tap operation on the synchronization icon 61 causes the lyrics to be displayed in synchronization with the current playback position (phrase). Furthermore, a long tap (long press) operation on the synchronization icon 61 causes the lyrics to be displayed from the beginning of the music piece being played.

### [On/Off of Lyrics Highlight Function]

The CPU 71 switches on/off of a highlight function in response to an operation of the highlight icon 60.

The highlight function here includes highlighting of lyrics text and animation.

The highlighting of lyrics text is, for example, a function of highlighting lyrics text corresponding to a playback part in accordance with playback of a music piece.

In the animation, for example, blinking or movement of artwork is executed according to a certain phrase by presentation setting of the artist as described in Fig. 10.

For example, as the highlight icon 60, the CPU 71 provides a button for switching between the following three stages in a toggle manner in highlighting.
- Display all highlighting (lyrics text + animation)
- Highlighting only lyrics text
- No highlighting

By doing this way, it is possible to switch between execution and non-execution of highlighting according to the user's demand. Such an on/off function is useful because some users may find highlighting annoying.

Note that, as a mode of highlighting, there may be a mode of displaying only animation.

### [Display of Music Piece Information According to Page Mode]

For example, there is the track title 62 as display of music piece information. This track title 62 is appropriately displayed.

Pages of the lyrics booklet or the like includes a page corresponding to one music track and a page corresponding to a plurality of music tracks. For the user, a title of a music piece of lyrics to which the user is currently paying attention is desirably displayed as the track title 62 when the user browses the lyrics booklet or the like.

Therefore, the track title 62 is displayed as follows.

When the currently displayed page is the page on which lyrics of one music track are placed, the CPU 71 controls to display a title of the music piece as the track title 62.

When the currently displayed page is a page on which lyrics of a plurality of music tracks are placed, the CPU 71 controls to display a title of a music piece corresponding to an upper left portion of the displayed range as the track title 62.

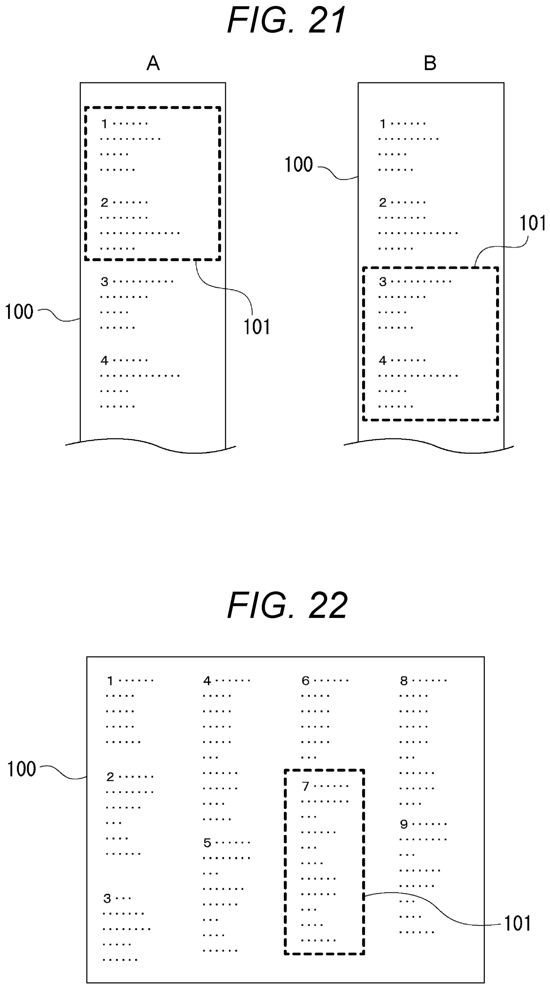

For example, Figs. 21A and 21B illustrate examples in which a page format is of the standard type, and lyrics of a plurality of music tracks are placed on one page. The display range 101 is indicated by a broken line in the entire page 100. The number indicates a track number.

If the display range 101 of Fig. 21A is displayed at a certain time point, the upper left portion is to be lyrics of the first music track. Therefore, a title of the first music track is displayed as the track title 62.

Furthermore, in a case where the display range 101 is moved as illustrated in Fig. 21B, the upper left portion is to be lyrics of the third music track. Therefore, a title of the third music track is displayed as the track title 62.

In Fig. 22, it is assumed that the page format is of the arbitrary shape type, and lyrics of nine music tracks are placed in the entire page 100.

When the display range 101 is displayed at a certain time point, an upper left portion is to be lyrics of the seventh music track. Therefore, a title of the seventh music track is displayed as the track title 62.

With such control, a title of a music piece that the user is paying attention to and reading the lyrics is displayed as the track title 62.

Note that, without limiting to the title of the music piece, the similar control can also be performed in a case where the music piece information of a creator, a composer, an arranger, a participating musician, and the like is displayed.

### [Playback Gimmick]

A playback gimmick that can deliver a digital experience to the user is provided.

For example, items, content, links, and the like that are not normally displayed are displayed under a predetermined condition.

Examples of conditions will be described.
- A music piece is played n times (for example, 100 times) .
- In a certain phrase of the music piece being played, a designated lyrics text portion or image position is tapped.
- A designated lyrics text portion or image position is tapped n times.
- In a case where it is determined that the user himself/herself is at a specific location (for example, a live venue, a location related to the content, or the like) on the basis of position information, related content is opened.
- The user is simultaneously present with other n users having the same related content within a predetermined distance range.

Examples of processing in a case where the condition is satisfied include the following examples.
- A limited link button is displayed.
- Transition to limited content is made.
- A hidden page is enabled to be browsed in the lyrics booklet or the like.
- Expressions and phrases of the lyrics booklet or the like are changed.
- A digital item is granted.

By preparing such a playback gimmick, it is possible to give a user a new experience. For example, a case is considered in which limited content is to be displayed when the user plays a favorite music piece many times. Furthermore, a limited link button is to be displayed when there are a predetermined number or more users who own the same music piece content or related content in a live venue or the like.

Furthermore, there are the following examples as conditions.
- It is determined that a degree of popularity of music piece content has increased (for example, the number of downloads or the number of times of playback is a predetermined number or more).
- A followed user plays music piece content.

Notification is made in the terminal device 4 when these conditions are satisfied. For example, notification of the number of downloads is made, or notification such as "xxx is playing **" is made.

Furthermore, a mechanism for sharing the limited content and the like described above with a social networking service (SNS) may be provided. For example, a case is considered in which a share button is displayed when a condition is satisfied or the like, and upload to the SNS is performed in response to a button operation.

### [Sharing Function of Playback Status and the Like]

With the sharing-mode icons 64 and 65, a playback status and the like can be shared between users or between the user and the artist.

In response to the operation of the sharing-mode icon 64, the CPU 71 sets a mode of the sharing function between users. Examples of the mode of the sharing function include a preference sharing mode, a current state sharing mode, and a comment sharing mode.

For example, the non-sharing, the preference sharing mode, the current state sharing mode, and the comment sharing mode are switched in a toggle manner by operating the sharing-mode icon 64.

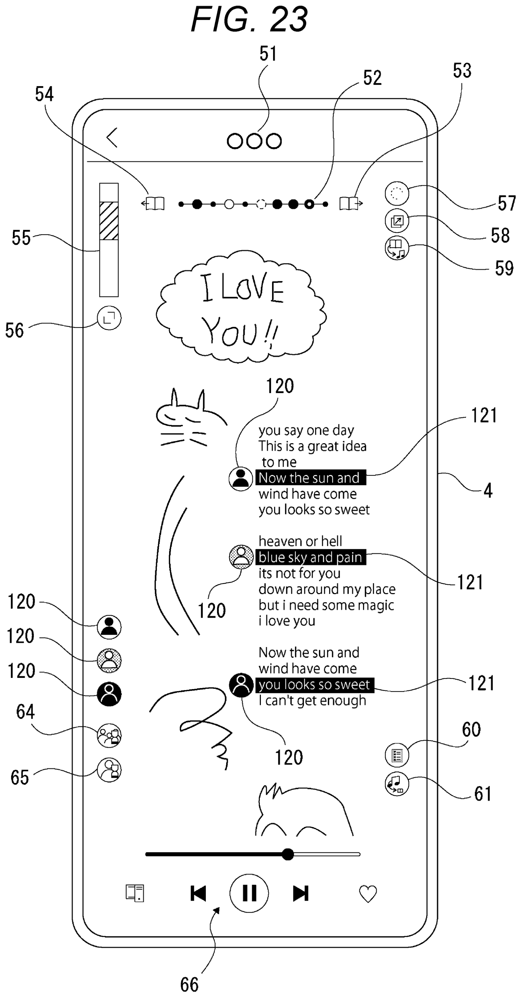

Note that the switching between the preference sharing mode, the current state sharing mode, and the comment sharing mode is also indicated by a change of the sharing-mode icon 64 as illustrated in Figs. 23, 24, and 25.

The preference sharing mode will be described with reference to Fig. 23.

In the preference sharing mode, one or a plurality of other user icons 120 is aligned and displayed near the sharing-mode icon 64. These are icons representing other users to whom preference information is shared. In the example of the figure, three other users are illustrated. For example, other users who are mutual followers of the user himself/herself, other users to whom the sharing setting is set, and the like are set as targets.

Then, in the preference sharing mode, a favorite phrase of each of other users is presented on the page display of the lyrics booklet or the like. In the figure, as preference phrase presentation 121, a favorite phrase of a person indicated by each of the other user icons 120 is presented.

For example, such display control is executed by determining a favorite phrase on the basis of a history that each user plays the phrase many times and sharing the determination information. Alternatively, each user can optionally set the favorite phrase.

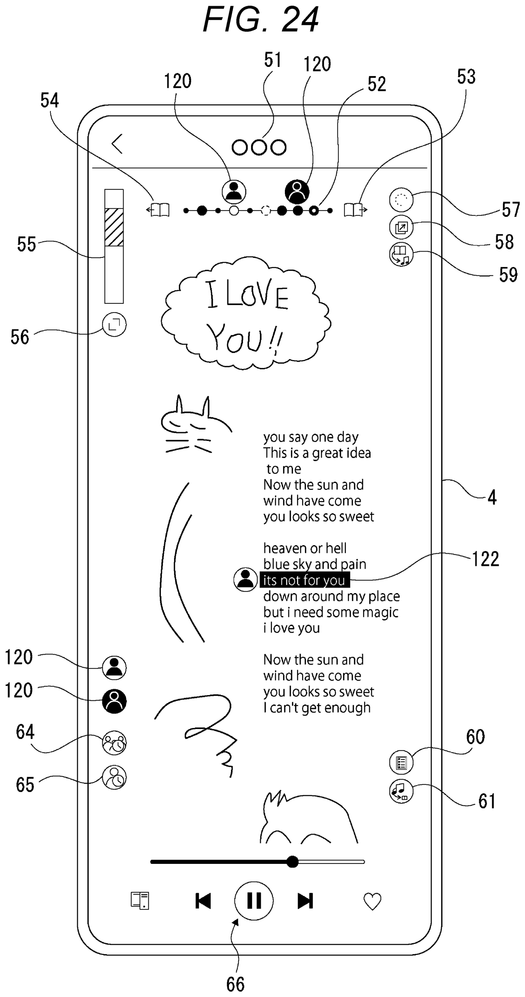

The current state sharing mode will be described with reference to Fig. 24.

In the current state sharing mode, one or a plurality of other user icons 120 is displayed. In this case, among other users who have set the sharing setting, a currently active login user is set as the target.

In the current state sharing mode, a listening part of the current music piece content of other users is presented. For example, this example indicates that the user himself/herself and two other users are listening to the same music album, one of the other users is listening to a music piece having the displayed lyrics in Fig. 24, and another one of the other users is listening to another music piece.

The listening part of one of the other users is indicated by listening phrase presentation 122 in the displayed lyrics text.

Furthermore, in the page guide 52, the listening part of other user is indicated by the other user icon 120. In this case, the other user icons 120 are displayed on the page on which the lyrics of the music piece being listened are placed, thereby indicating which part in the music album the users are listening to.

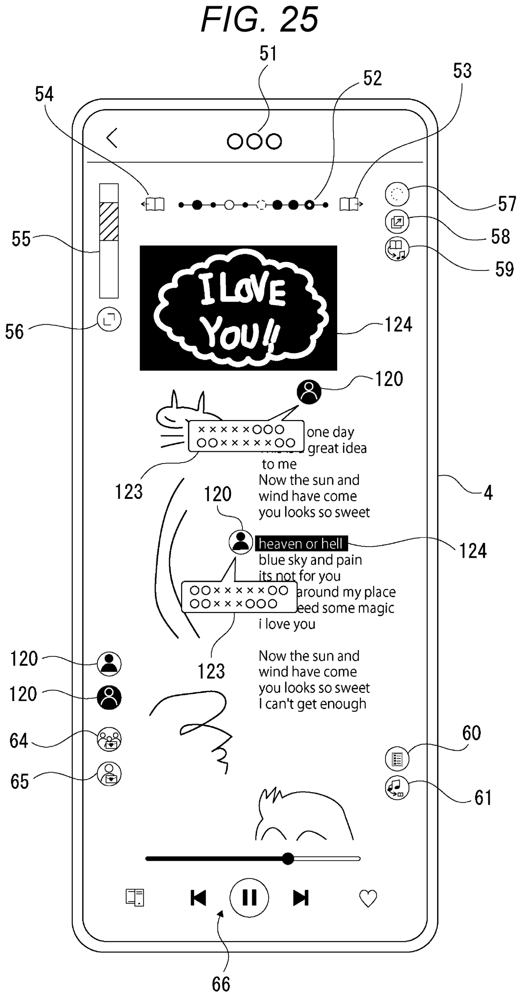

The comment sharing mode will be described with reference to Fig. 25.

Also in the comment sharing mode, one or a plurality of other user icons 120 of users who have set the sharing setting is displayed.

In this comment sharing mode, a comment 123 of other user is displayed. A comment target is indicated with comment target presentation 124 for the other user icon 120. For example, an artwork portion, a phrase on lyrics text, or the like is indicated. Then, the comment 123 is displayed in the vicinity of the comment target together with the other user icon 120.

Although the sharing between users by the sharing-mode icon 64 has been described above, similar sharing with the artist can be performed according to an operation of the sharing-mode icon 65. For example, non-sharing, a preference sharing mode, a current state sharing mode, and a comment sharing mode are switched in a toggle manner by operating the sharing-mode icon 65.

Note that, also in this case, the switching between the preference sharing mode, the current state sharing mode, and the comment sharing mode is also indicated by a change of the sharing-mode icon 65 as illustrated in Figs. 23, 24, and 25.

In the preference sharing mode, the artist's favorite part of the music piece is displayed.

In the current state sharing mode, a part being listened by the artist of the music piece is presented.

In the comment sharing mode, a comment uploaded by the artist of the music piece is displayed.

That is, when the artist himself/herself logs in a browsing service of the lyrics booklet or the like, the artist can give notification to general users by adding explanations or comments on his/her own music piece or lyrics or presenting a favorite part.

Furthermore, in addition to the artist himself/herself of the music piece, it is also possible to optionally display an artist or the like followed by the user, and at that time, the user can feel that the favorite artists enjoy each other's music pieces.

### [Processing Example]

Various functions for browsing the lyrics booklet or the like provided by the terminal device 4 have been described above, and a processing example of the terminal device 4 that implements these functions will be described. The following is a processing example executed by the CPU 71, which is a control unit of the terminal device 4, through a website that provides an application program or a service.

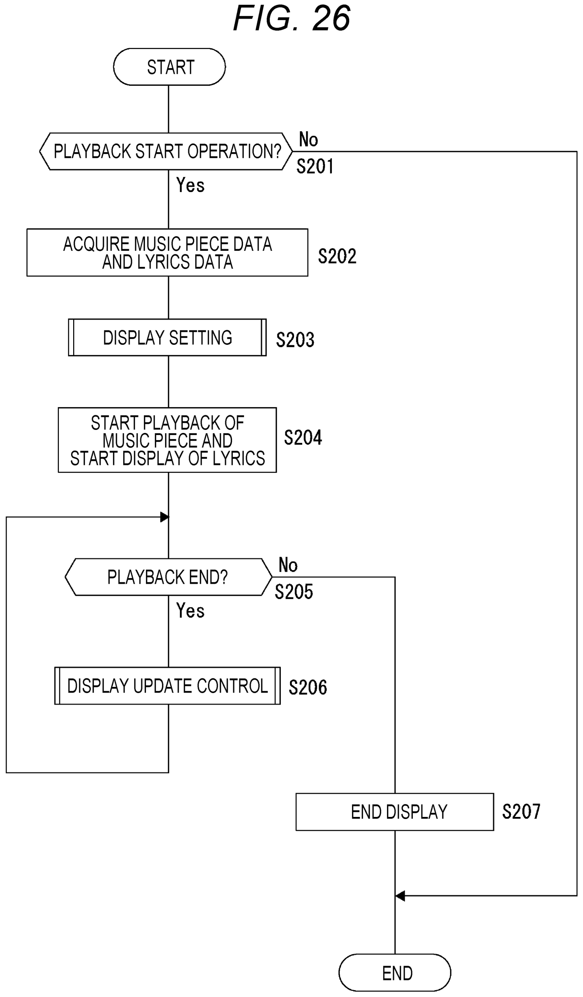

Fig. 26 illustrates a processing example related to display at a time of playback of music piece content.

In a case where a playback start operation of the music piece content is performed, the CPU 71 proceeds from step S201 to step S202, and acquires music piece data and lyrics data. The music piece data is audio data of each music track of the content as a music piece album. The lyrics data includes image data of the lyrics booklet or the like and presentation data accompanying the image data.

In a case where the user has already purchased the music piece data and the lyrics data related to the music piece content from the server device 1 and stored the music piece data and the lyrics data in a storage medium of the terminal device 4, the CPU 71 is only required to read the target data from the storage medium (for example, the storage unit 79).

Furthermore, a form may be adopted in which the music piece data and the lyrics data are sequentially acquired from the server device 1 at a time of playback.

In step S203, the CPU 71 performs display setting processing for displaying the lyrics booklet or the like, for the music piece content to be played this time.

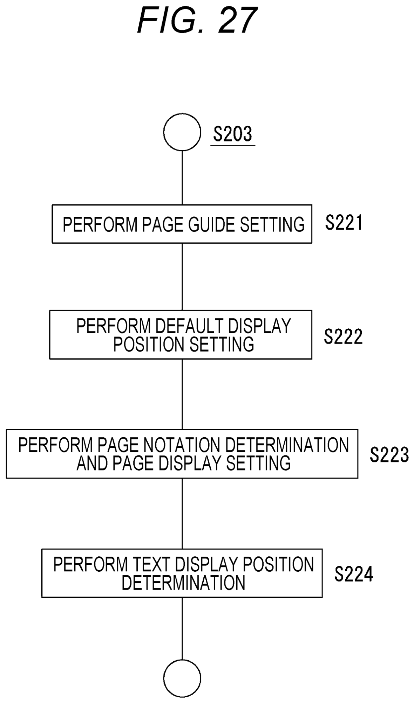

Fig. 27 illustrates an example of this display setting processing.

In step S221, the CPU 71 performs page guide setting. The CPU 71 analyzes an image of each page of the lyrics booklet or the like acquired as the lyrics data, and determines the number of pages, a type of each page, and the like. The type is, for example, a distinction between a lyrics placement page and a non lyrics placement page, and the like. That is, the CPU 71 makes it possible to execute initial display of the page guide 52 by these determinations.

In step S222, the CPU 71 performs default display position setting. As described above in "Automatic Determination of Default Position in Display Position Guide", the processing is for automatically determining a range to be displayed first by the CPU 71 in a case where the page shape of the lyrics booklet or the like is the arbitrary shape type. The CPU 71 analyzes an image of each page of the lyrics booklet or the like acquired as the lyrics data, and determines, for each page, a default position at which the lyrics are most easily viewed when the page of the lyrics booklet or the like is first displayed.

In step S223, the CPU 71 performs page notation determination and page display setting.

These are preparation processing for displaying the page number 63. The CPU 71 analyzes an image of each page of the lyrics booklet or the like acquired as the lyrics data, and determines whether there is a page notation in each page.

For example, the page notation for each page is determined by checking whether or not there is numerical notation within a predetermined distance from four corners of the image of the page, whether or not there is fractional notation of "X/X", and whether or not a numerical value corresponds to the order of pages. Furthermore, a position of the page notation in the page is also checked.

Then, the CPU 71 performs setting to always display the page number 63 on the screen for a page having no page notation. For a page in which there is the page notation, the page notation position is stored, and setting is performed to switch display on/off of the page number 63 in accordance with a display range at a time of displaying the page. That is, setting is performed to turn off the display of the page number 63 when the page notation position is included in the display range, and turn on the display of the page number 63 when the page notation position is not included in the display range.

In step S224, the CPU 71 performs text display position determination on each page.

This is preparation processing for performing text position display in the display position guide 55 as illustrated in Fig. 19. The CPU 71 analyzes an image of each page of the lyrics booklet or the like acquired as the lyrics data, and determines and stores a text placement area on each page.

Note that since the processing of each step in the processing example of Fig. 27 is processing based on the image analysis result of the page, the processing order may be any order. The figure is merely an example.

Furthermore, the CPU 71 does not need to perform the analysis processing in steps S221, S222, S223, and the like every time at a time of playback. For example, image analysis of each page of the lyrics booklet or the like may be performed in advance, analyzed data may be stored in a database, analyzed data may be acquired in step S202, and the initial display setting, the default display position setting, and the page display setting of the page guide 52 may be performed on the basis of the analyzed data.

After the processing as described above is performed in step S203 of Fig. 26, the CPU 71 proceeds to step S204, and performs control to start playback of the music piece content and perform control to start display of the lyrics booklet or the like.

At this point, for example, icons and the like for the user interfaces are displayed together with the lyrics booklet or the like as illustrated in Fig. 15A. The page guide 52 and the display position guide 55 are displayed according to the current lyrics booklet or the like, and the page number 63 is displayed according to the display setting.

After the playback and the display are started, the CPU 71 performs display update control in step S206 while monitoring an end of playback in step S205.

Note that, during playback, the CPU 71 performs music track skipping, volume control, fast-forwarding, fast-rewinding, display update of a progress bar of a playback part, and the like in response to an operation of the audio control 66 or the like, but description of processing related to the music piece playback is omitted.

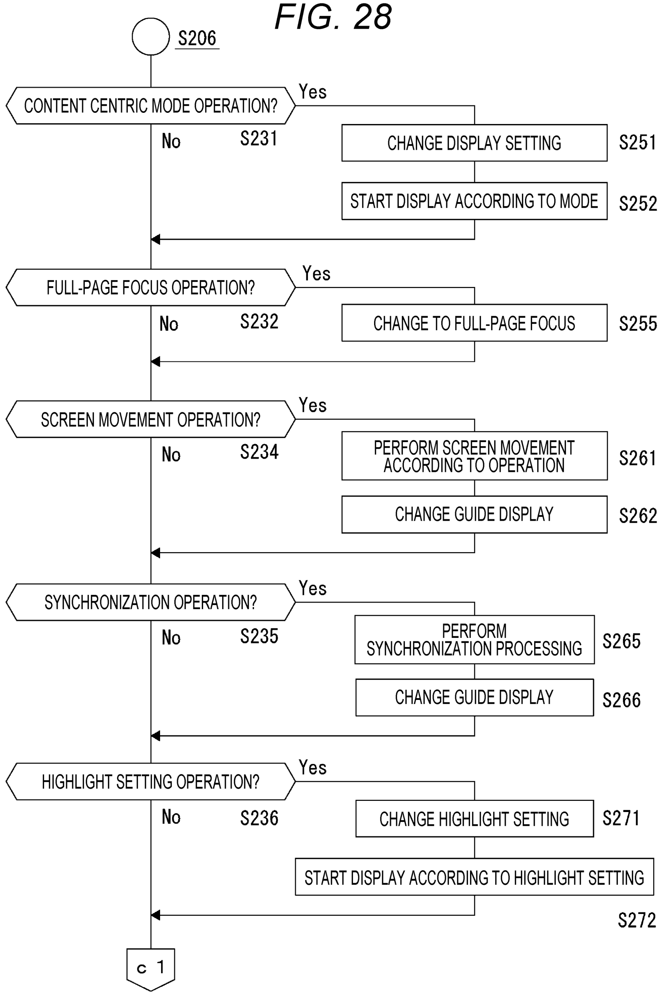

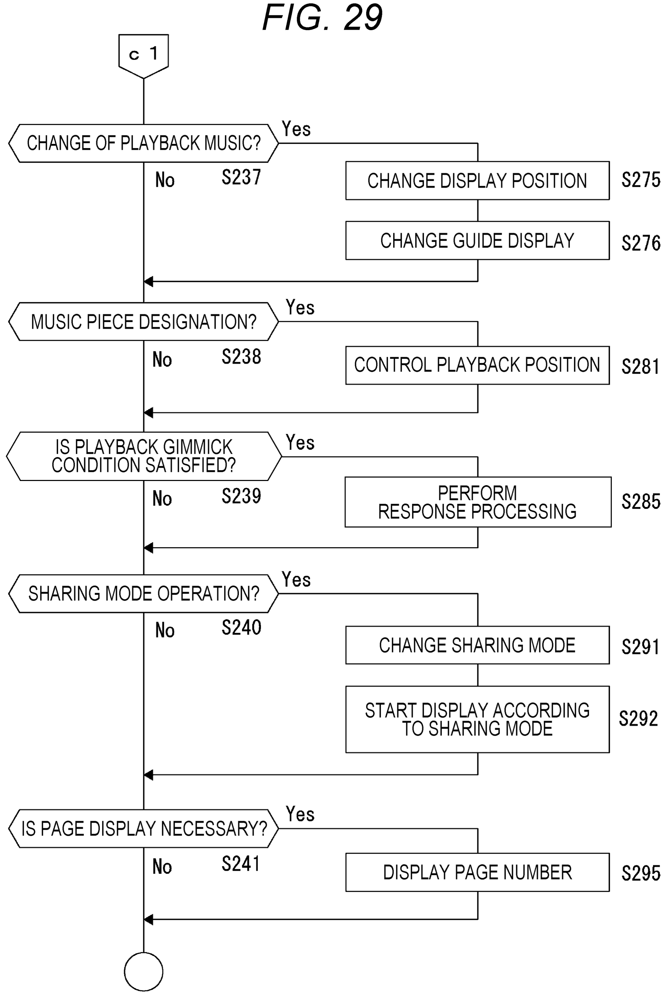

Figs. 28 and 29 illustrate examples of the display update control performed in step S206. Note that "c1" in Figs. 28 and 29 indicates that flowcharts of the respective figures are continuous.

Note that Figs. 28 and 29 do not illustrate all processing related to the display update, but particularly illustrate processing related to a display function of the lyrics booklet or the like of the present embodiment. In practice, other processing may be performed.

In the display update control, the CPU 71 performs individual monitoring processing from step S231 in Fig. 28 to step S241 in Fig. 29.

In step S231, the CPU 71 monitors an operation of the content centric mode. For example, a tap operation by the user at any position on the screen is monitored. In a case where this operation is detected, the CPU 71 proceeds to step S251 and changes the display setting. That is, if the normal display mode has been set so far, the content centric mode is set. If the content centric mode has been set so far, the normal display is set.

Then, in step S252, the CPU 71 starts display according to the mode setting changed. As a result, the display state is switched as illustrated in Figs. 15A and 15B.

In step S232, the CPU 71 determines whether or not a full-page focus operation has been performed. This processing is operation monitoring of the full-page focus icon 56.

For example, in step S232, the CPU 71 controls to display the full-page focus icon 56 in response to enlargement or reduction of the image of the lyrics booklet or the like by a pinch operation or the like, and monitors whether or not the full-page focus icon 56 has been operated.

Upon detecting that the full-page focus icon 56 has been operated, the CPU 71 proceeds to step S255 and changes to the full-page focus state. That is, control is performed to return the image of the lyrics booklet or the like to the state focused in the default size. Furthermore, the CPU 71 controls to erase the full-page focus icon 56 in response to returning to the default size.

In step S234, the CPU 71 monitors a screen movement operation. Upon detecting the screen movement operation, the CPU 71 proceeds from step S234 to step S261, and performs control of screen movement in response to the operation. Furthermore, if necessary, the CPU 71 changes the guide display in step S262.

The screen movement operation here refers to an operation of the user to change the display range of the screen. For example, the screen movement operation includes a scroll operation, a pinch operation, an operation of the page turn icon 53, an operation of the page return icon 54, a scroll operation and a drag operation in a case where the area 55a of the display position guide 55 is used as an operation element, and a page transition operation in a case where the page guide 52 is used as an operation element.

In response to these operations, in step S261, the CPU 71 performs control of the change of the display position on the screen in the page, the enlargement/reduction, and the transition to another page.

Furthermore, as the guide display change, in step S262, the CPU 71 performs control such as movement and enlargement/reduction of the area 55a of the display position guide 55 according to the change of the display position on the screen in the page, a change of the display of the page guide 52 in the case of page transition (for example, a change of a position of the mark 92 indicating the lyrics placement page being displayed), a change of the track title 62 according to the change of the display portion of the lyrics, and a change of the page number 63 according to the page transition.

In step S235, the CPU 71 monitors a synchronization operation.

Upon detecting the synchronization operation, that is, an operation of the synchronization icon 59 or the synchronization icon 61, the CPU 71 proceeds from step S235 to step S265 and performs the synchronization processing in response to the operation. That is, in response to an operation of the synchronization icon 59, the playback position is controlled so as to synchronize the music piece playback position with the lyrics text. Furthermore, in the case of an operation of the synchronization icon 61, control is performed to change the display position or the display page so as to synchronize the lyrics display with the playback position.

Furthermore, if necessary in accordance with the change of the playback position or the change of the display position, the CPU 71 performs change control of the guide display in step S266. For example, control is performed such as movement of the area 55a of the display position guide 55 according to the change of the display position on the screen in the page, a change of the display state of the page guide 52 and the page number 63 in the case of page transition, and a change of the track title 62.

In step S236, the CPU 71 monitors a highlight setting operation using the highlight icon 60. Upon detecting an operation of the highlight icon 60, the CPU 71 proceeds from step S236 to step S271, and changes the highlight setting in response to the operation. For example, the highlight setting is turned off if the highlight function is currently on, and the highlight setting is turned on if the highlight function is currently off. Alternatively, if the highlight function is switchable between three modes of "display all highlighting", "highlighting only lyrics text", and "highlighting" as described above, for example, the highlight setting is changed in a toggle manner in response to the operation of the highlight icon 60.

Then, in step S272, the CPU 71 starts display according to the change in highlight setting.

In step S237 of Fig. 29, the CPU 71 monitors a change of playback music.

Upon detecting the change of playback music, the CPU 71 proceeds from step S237 to step S275, and performs control of a display position change of the lyrics booklet or the like. For example, after the playback of the second music track in the music album ends and the playback proceeds to the third music track, the page transitions to a page on which the lyrics of the third music track are placed in the lyrics booklet or the like. Alternatively, the display position is moved in the page such that the lyrics of the third music track are displayed.

Furthermore, the CPU 71 performs change control of the guide display in step S276. For example, control is performed such as movement of the area 55a of the display position guide 55 according to the change of the display position on the screen in the page, a change of the display state of the page guide 52 and the page number 63 in the case of page transition, and a change of the track title 62.

Note that such a display position change of the booklet or the like synchronized with the playback music may not be performed. For example, the user may be viewing a page of another music piece in the lyrics booklet even after the playback music has changed. Furthermore, even if the same music piece is being played and the page is being displayed, it is not always necessary to perform the automatic page transition in synchronization, and the user may wish to change the page at his/her own timing. For this reason, in a case of providing usability similar to that in a case of turning a paper lyrics booklet or the like of a real CD, it is preferable not to perform the processing of steps S237, S275, and S276.

In step S238, the CPU 71 monitors a designation operation on a lyrics portion. For example, a tap operation and the like on a lyrics text portion in display of the lyrics booklet or the like are monitored. Upon detecting such a designation operation on the lyrics, the CPU 71 proceeds from step S238 to step S281, and performs control of the playback position of the music piece content so as to synchronize the music piece playback position with the lyrics text.

In step S239, the CPU 71 determines whether a condition related to a playback gimmick is satisfied.

For example, a user operation, the number of times of playback, position information, a listening status of the user, and the like are determined, and the presence or absence of condition satisfaction regarding the playback gimmick is determined.

In a case where the condition satisfaction related to the playback gimmick is detected, the CPU 71 proceeds from step S239 to step S285 and performs response processing according to the satisfaction condition. For example, control is performed such as display of a limited link button and display of a hidden page described above.

In step S240, the CPU 71 monitors a sharing mode operation.

In a case where the sharing mode operation, that is, an operation of the sharing-mode icon 64 or the sharing-mode icon 65 is detected, the CPU 71 proceeds from step S240 to step S291 and performs processing of changing the sharing mode. For example, switching is performed between the non-sharing, the preference sharing mode, the current state sharing mode, and the comment sharing mode described above.

Then, in step S292, the CPU 71 starts display according to the sharing mode. That is, the CPU 71 controls to execute the normal display without information sharing thereafter when the mode is changed to the non-sharing, and the CPU controls to execute the display as illustrated in Fig. 23 thereafter when the preference sharing mode is set. Furthermore, the CPU 71 controls to execute the display as illustrated in Fig. 24 thereafter when the current state sharing mode is set, and the CPU controls to execute the display as illustrated in Fig. 25 thereafter when the comment sharing mode is set.

In the case of the sharing mode, the CPU 71 may monitor position information of the user, a listening status, and the like, and perform display corresponding thereto.

In step S241, the CPU 71 makes determination related to page display.

The CPU 71 determines whether or not it is necessary to display the page number 63, and performs display control of the page number 63 in step S295 after determining that it is necessary.

For example, in a case where there is no page notation in the lyrics booklet or the like, or in a case where there is a page notation but the page notation is not shown in the current display range, the CPU 71 controls to display the page number 63.

For example, the processing in Figs. 28 and 29 is performed in step S206 in Fig. 26. As a result, the display operation of the various functions and the playback operation described above are performed.

Note that the order of the monitoring processing from step S231 to step S241 in Figs. 28 and 29 may be any order. In any order, it suffices that the monitoring processing and the response processing corresponding to the monitoring are performed at the timing of step S206 in Fig. 26.

Upon detecting an end of playback in step S205 of Fig. 26, the CPU 71 proceeds to step S207, ends the display of the lyrics booklet or the like, and ends the processing.

### <5. Conclusion and Modifications>

According to the above-described embodiment, the following effects can be obtained.

The information processing apparatus 70 used as the terminal device 4 of the embodiment includes a control unit (CPU 71) configured to perform control to display related content that is content associated with music piece content and including a plurality of pages with characters or images on each page, and display the page guide 52 indicating a page being displayed in a whole of the related content.

The terminal device 4 performs control to display the lyrics booklet including the page guide 52 on a screen by the CPU 71 as the control unit performing the processing as illustrated in Figs. 26 to 29 in accordance with the installed application program, for example.

By electronically displaying the lyrics booklet (lyrics sheet), the user can feel the expression of the artist not only through music but also through the accompanying artwork. In this case, the display of the page guide 52 described with reference to Figs. 14 and 20 enables the user to easily recognize which page in the whole is being viewed, in a case of viewing the lyrics booklet or the like on the terminal device 4.

Note that, in the embodiment, the example of the lyrics booklet or the like corresponding to the music piece content including the lyrics has been described. However, the present technology is also applicable to, for example, a case of a booklet in a case where the music piece content is an instrumental music piece or an instrumental music piece album without lyrics. For example, the technology of the present disclosure can be applied to a case where a booklet as artwork such as a photograph, an illustration, or an animation is associated with a music piece or a music piece album, and the booklet is displayed.

Furthermore, the page guide 52 has been described as an example of a guide of each page in a plurality of pages of a lyrics booklet. However, for example, one lyrics sheet including all lyrics, artwork, and the like may be regarded as related content for content of a music piece album. In such a case, the page guide 52 may be in a display form indicating a lyrics placement position of each music piece (track) in one page.

In the embodiment, an example has been described in which the related content includes characters that are lyrics of the corresponding music piece content, and the CPU 71 performs control to display the related content at a time of playback of the music piece content.

By displaying the lyrics booklet or the like at a time of music piece playback, the user can have an experience of when listening to a CD or a record, that is, reading lyrics or enjoying artwork while listening to music using the terminal device 4 such as a smartphone.

In particular, by freely changing the display position of the lyrics booklet or the like or by controlling the display position in accordance with the progress of the music track, the user can experience a similar way of enjoyment as when watching the actual lyrics booklet with his/her eyes while listening to the music.

In the embodiment, the CPU 71 controls to execute, in the page guide 52, display indicating a page including lyrics and a page not including lyrics.

As illustrated in Fig. 20, in the page guide 52, each page of the lyrics booklet is expressed by, for example, a circular mark and the like on a bar, and the mark 90 (and 92, 93, and 94) of a lyrics placement page and the mark 91 of a non lyrics placement page are displayed by setting a display mode (for example, a size of the circle) of the circular portion. As a result, it becomes easier for the user to grasp the entire lyrics booklet.

In the embodiment, the CPU 71 controls to execute, in the page guide 52, display indicating a page on which the lyrics of one music piece are placed and a page on which the lyrics of a plurality of music pieces are placed.

In the page guide 52, by displaying the mark 90 of a lyrics placement page and the mark 94 of a lyrics placement page of a plurality of music tracks in different display modes, the user can easily grasp a desired page in a case where the user desires to move the page. For example, when it is desired to read lyrics of a music track that is five music tracks ahead in the album, the destination page can be easily grasped since the page guide 52 indicates a page of one music piece or a plurality of music pieces.

Note that, for example, the number of music tracks may be clearly indicated by a number. For example, a number may be added in the mark 90 such as a circle of a lyrics placement page to indicate the number of music tracks whose lyrics are placed on the page.

In the embodiment, at a time of playback of the music piece content, the CPU 71 controls to execute, in the page guide 52, display indicating the currently displayed page and a page on which the lyrics of the currently played music piece.

The user does not always necessarily view the lyrics of the currently played music piece during the music piece playback. Furthermore, while the user is viewing lyrics of another music piece, the user may desire to return to the page of lyrics of the music piece being played. Therefore, the mark 92 of the lyrics placement page being displayed and the mark 93 of the lyrics placement page of the music piece being played are displayed with distinguishment. As a result, the user can grasp that the user is viewing lyrics of a music piece that is not being played, and this configuration serves as a guide suitable for an operation when the user desires to return to the page of the lyrics of the music piece being played.

In the embodiment, the CPU 71 performs control to execute display of the display position guide 55 indicating a displayed position in one page of the related content.

For example, as described in Figs. 15 and 16, by clearly indicating the currently displayed area in the entire page with the display position guide 55, the user can be aware of the entire page (the entire lyrics sheet in a case of one lyrics sheet) when the user views the page of the lyrics booklet or the like. This configuration also serves as a guide for a scroll operation and a pinch operation, and improves operability.

In the embodiment, the CPU 71 sets an initial display position on the basis of the placement position of the lyrics in the related content.

For example, the placement position of the lyrics in the lyrics booklet is determined and the default display position is set in step S222 of Fig. 27, and the display of the lyrics booklet is started at the default display position at a start of playback of the music piece in step S204 of Fig. 26. As a result, display is executed from a position appropriate for the user at the start of playback of the music piece.

Furthermore, in this case, the display position is clearly indicated in the display position guide 55 as illustrated in Fig. 17B, so that the user can recognize the display range in the initial display state of the lyrics booklet or the like.

In the embodiment, an example has been described in which the CPU 71 changes the display position of the related content in accordance with a change of the playback music piece, and performs control to indicate the display position in the page in the display position guide 55.

For example, as described in Figs. 21 and 22, and steps S237, S275, and S276 in Fig. 29, in a page on which a plurality of lyrics is placed, when the playback music piece changes due to moving to the next track or the like, a part of lyrics corresponding to the new playback music piece is displayed. As a result, it is possible to perform desirable display of the lyrics booklet for the user. Furthermore, by clearly indicating the display position in the display position guide 55, the user can recognize the display position in the page.

In the embodiment, an example has been described in which the CPU 71 performs control to indicate the lyrics placement position in the page in the display position guide 55.

For example, as illustrated in Figs. 19A and 19B, display is performed such that the placement position (placement region) of the lyrics in the page is expressed in the display position guide 55. This configuration serves a guide for a scroll operation in a case where the user views lyrics of another music piece in the page. In particular, in a lyrics booklet or a lyrics sheet that is a place for expression of an artist, the lyrics of each music track are not always orderly placed side by side. The lyrics may be scattered in various sizes, fonts, and the like in various locations in the page. Therefore, the guide of the placement position of the lyrics is extremely convenient when viewing the lyrics booklet or the lyrics sheet.

In the embodiment, an example has been described in which the CPU 71 performs control to execute display of the page number 63 in a case where there is no page notation in the display range of the related content (see steps S241 and S295 in Fig. 29).

In a case where there is a page notation in the lyrics booklet itself, the user knows the page number on the display of the lyrics booklet, but it is difficult for the user to know the page number without the page notation in the lyrics booklet itself. Therefore, in addition to the page guide 52, the page number 63 is also displayed as a guide for the user. In particular, since the user does not actually hold the leaflet, the display indicating the current page in the entire page makes it easy to convey the overall sense of volume of the lyrics booklet to the user.

In the embodiment, an example has been described in which the CPU 71 performs control to display the related content at the time of playback of the music piece content and performs control to change a playback part of the music piece content to a playback part corresponding to a display part of the related content, in response to a predetermined operation.

For example, as the synchronization processing according to an operation of the synchronization icon 59, the CPU 71 controls playback music of the music piece content so as to play the music track whose lyrics are currently displayed. As a result, it is possible to provide a convenient function in a case where the user desires to listen to the music track immediately after viewing the lyrics (see steps S235, S265, and S266 in Fig. 28).

Furthermore, a tap operation on the lyrics text can also provide a convenient function in a case where the user desires to listen to the phrase immediately after viewing the lyrics (see steps S238 and S281 in Fig. 29).

In the embodiment, an example has been described in which the CPU 71 performs control to change a display part of the related content to a display part corresponding to a playback part of music piece content, in response to a predetermined operation.

For example, as the synchronization processing according to an operation of the synchronization icon 61, the CPU 71 performs control to change a lyrics display part to a part corresponding to the currently played music piece. As a result, it is possible to provide a convenient function in a case where the user desires to view lyrics immediately after listening to the music track (see steps S235, S265, and S266 in Fig. 28).

In the embodiment, an example has been described in which the CPU 71 performs processing of switching between a display mode in which part of related content is highlighted and a display mode in which highlighting is not executed, in response to a predetermined operation (see steps S236, S271, and S272 in Fig. 28).

By highlighting a part of corresponding lyrics in accordance with playback of a music piece or by highlighting lyrics and pictures in accordance with the effect setting of the artist, it is possible to exhibit usefulness of the lyrics booklet or the lyrics sheet as digital content. However, by preparing a mode in which such highlighting is not performed, it is possible to provide the user with a view equivalent to that of a paper lyrics booklet or the like.

In the embodiment, an example has been described in which the CPU 71 performs processing of switching between a display mode in which an image for a user interface is displayed in a superimposed manner on the image of the related content and a display mode in which an image for a user interface is not displayed in a superimposed manner on the image of the related content, in response to a predetermined operation (see steps S231, S251, and S252 in Fig. 28).

As the content centric mode, it is possible not to display various icons and guides for the user interfaces as illustrated in Fig. 17B. By doing this way, it is possible to provide the user with an experience of purely viewing the lyrics booklet or the like.

Note that, even in a case where icons and guides are displayed in the normal display mode which is not the content centric mode, it is possible to prevent an image of the lyrics booklet or the like from being disturbed as much as possible by displaying each icon or guide only when necessary. Therefore, as described with the display position guide 55, the full-page focus icon 56, the page number 63, and the like, it is preferable to temporarily display icons, guides, and the like when necessary.

In the embodiment, an example has been described in which the CPU 71 performs output control according to a satisfaction condition in response to determining that a predetermined condition is satisfied on the basis of a user's action related to playback of the music piece content or display of the related content (see steps S239 and S285 in Fig. 29).

As a result, it is possible to provide the user with an effect obtained by providing the lyrics booklet or the lyrics sheet as the digital content. For example, as the playback gimmick described above, by displaying an image or a transition destination page that is not normally displayed, changing the content of the lyrics booklet, or displaying a hidden page, it is possible to provide the user with an experience that is not possible with a paper lyrics booklet.

In the embodiment, an example has been described in which the CPU 71 performs processing of displaying information related to other person on the display of the related content in response to a predetermined operation (see steps S240, S291, and S292 in Fig. 29).

By preparing the sharing mode for sharing with other users or the artist and displaying information regarding other users or information regarding the artist, it is possible to provide the user with more various music experiences.

The information related to other person described above is information about a listening part of other person, information about a preferred part of other person, comment information related to other person, and the like.

By displaying these pieces of information, it is possible to share thoughts of other users and the artist on the music piece, the lyrics, the artwork, and the like.

Note that, although the preference sharing mode, the current state sharing mode, and the comment sharing mode have been described as the sharing mode, only some of these modes may be executed.

Various effects of the embodiment as described above are achieved by the terminal device 4 performing the processing as illustrated in Figs. 26 to 29 with the CPU 71 as the control unit, in accordance with the application program. However, in the present technology, the server device 1 can also be assumed as the information processing apparatus 70 that performs the control as described above to enable the user to browse the lyrics booklet or the like. For example, when the server device 1 distributes music piece data to the terminal device 4 to play the music piece data, a system operation is possible in which the CPU 71 of the server device 1 performs the same processing as that in Figs. 26 to 29 to control display of the lyrics booklet on the terminal device 4. Even in such a case, the effects of the embodiment described above can be similarly obtained.

A program of the embodiment is a program for causing, for example, a CPU, a digital signal processor (DSP), an AI processor, or the like, or the information processing apparatus 70 including these to execute the processing as illustrated in Figs. 26 to 29 and the processing as illustrated in Fig. 6.

That is, the program of the embodiment is a program for causing the information processing apparatus 70 to execute control to: display related content that is associated with music piece content and includes a plurality of pages on which a character or an image is displayed; and display the page guide 52 indicating a page being displayed in a whole of the related content.

With such a program, the information processing apparatus 70 as the terminal device 4 or the server device 1 of the embodiment can be implemented in, for example, a computer device, a mobile terminal device, or other devices capable of executing information processing.

Such a program can be recorded in advance in an HDD as a recording medium built in a device such as a computer apparatus, a ROM in a microcomputer having a CPU, and the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program can be installed from the removable recording medium into a personal computer and the like, or can be downloaded from a download site through a network such as a local area network (LAN) or the Internet.

Furthermore, such a program is suitable for providing the information processing apparatus 70 constituting the terminal device 4 or the server device 1 of the embodiment in a wide range. For example, by downloading the program to a portable terminal device such as a smartphone or a tablet, a mobile phone, a personal computer, a game device, a video device, a personal digital assistant (PDA), or the like, these devices can be used as the information processing apparatus 70 that functions as the terminal device 4 or the server device 1 of the present disclosure.

Note that, as the program of the embodiment, there is also a program that causes the information processing apparatus 70 to execute processing as illustrated in Fig. 6. As a result, the terminal device 3 used by the artist to generate and edit the lyrics booklet or the like can be achieved.

Note that, the effects described in the present specification are merely examples and are not limited, and other effects may be provided.

Note that the present technology can also adopt the following configurations.
(1) An information processing apparatus including:
   a control unit configured to perform control to display related content and display a page guide indicating a page being displayed in a whole of the related content, the related content being associated with music piece content and including a plurality of pages on which a character or an image is displayed.
(2) The information processing apparatus according to (1) described above, in which
   the related content includes characters that are lyrics of corresponding music piece content, and
   the control unit performs control to display the related content at a time of playback of music piece content.
(3) The information processing apparatus according to (1) or (2) described above, in which
   the related content includes characters that are lyrics of corresponding music piece content, and
   the control unit controls to execute, in the page guide, display indicating a page including lyrics and a page not including lyrics in the related content.
(4) The information processing apparatus according to any one of (1) to (3) described above, in which
   the related content includes characters that are lyrics of corresponding music piece content, and
   the control unit controls to execute, in the page guide, display indicating a page on which lyrics of one music piece are placed and a page on which lyrics of a plurality of music pieces are placed in the related content.
(5) The information processing apparatus according to any one of (1) to (4) described above, in which
   the related content includes characters that are lyrics of corresponding music piece content, and
   the control unit performs control to execute display of the related content at a time of playback of music piece content, and controls to execute, in the page guide, display indicating a currently displayed page and a page on which lyrics of a currently played music piece are placed.
(6) The information processing apparatus according to any one of (1) to (5) described above, in which
   the control unit performs control to execute display of a display position guide indicating a position being displayed in one page of the related content.
(7) The information processing apparatus according to (6) described above, in which
   the related content includes characters that are lyrics of corresponding music piece content, and
   the control unit sets an initial display position on the basis of a placement position of the lyrics in the related content.
(8) The information processing apparatus according to (6) or (7) described above, in which
   the control unit performs control to display the related content at a time of playback of music piece content, and performs control to change a display position of the related content in accordance with a change of a playback music piece, to indicate a display position in a page in the display position guide.
(9) The information processing apparatus according to any one of (6) to (8) described above, in which
   the related content includes characters that are lyrics of corresponding music piece content, and
   the control unit performs control to indicate a lyrics placement position in a page in the display position guide.
(10) The information processing apparatus according to any one of (1) to (9) described above, in which
   in a case where there is no page notation in a display range of the related content, the control unit performs control to execute display of a page number.
(11) The information processing apparatus according to any one of (1) to (10) described above, in which
   the related content includes characters that are lyrics of corresponding music piece content, and
   the control unit performs control to display the related content at a time of playback of music piece content, and performs control to change a playback part of music piece content to a playback part corresponding to a display part of the related content, in response to a predetermined operation.
(12) The information processing apparatus according to any one of (1) to (11) described above, in which
   the related content includes characters that are lyrics of corresponding music piece content, and
   the control unit performs control to display the related content at a time of playback of music piece content, and performs control to change a display part of the related content to a display part corresponding to a playback part of music piece content, in response to a predetermined operation.
(13) The information processing apparatus according to any one of (1) to (12) described above, in which
   the control unit performs processing of switching between a display mode in which a part of the related content is subjected to highlighting and a display mode in which the highlighting is not executed, in response to a predetermined operation.
(14) The information processing apparatus according to any one of (1) to (13) described above, in which
   the control unit performs processing of switching between a display mode in which an image for a user interface is displayed in a superimposed manner on an image of the related content and a display mode in which an image for a user interface is not displayed in a superimposed manner on an image of the related content, in response to a predetermined operation.
(15) The information processing apparatus according to any one of (1) to (14) described above, in which
   the control unit performs output control according to a satisfaction condition in response to determining that a predetermined condition is satisfied on the basis of a user's action related to playback of the music piece content or display of the related content.
(16) The information processing apparatus according to any one of (1) to (15) described above, in which
   the control unit performs processing of displaying information related to other person on display of the related content, in response to a predetermined operation.
(17) The information processing apparatus according to (16) described above, in which
   the information related to other person includes any of information related to a listening part of other person, information related to a preferred part of other person, and comment information related to other person.
(18) An information processing method performed by an information processing apparatus, the information processing method including:
   executing control to display related content and display a page guide indicating a page being displayed in a whole of the related content, the related content being associated with music piece content and including a plurality of pages on which a character or an image is displayed.
(19) A program for causing an information processing apparatus to execute control to:
   display related content and display a page guide indicating a page being displayed in a whole of the related content, the related content being associated with music piece content and including a plurality of pages on which a character or an image is displayed.

### REFERENCE SIGNS LIST

- 1: Server device
- 2: Database
- 3, 4: Terminal device
- 6: Network
- 20: Edit screen
- 52: Page guide
- 53: Page turn icon
- 54: Page return icon
- 55: Display position guide
- 56: Full-page focus icon
- 57: Reversing icon
- 58: Link icon
- 59, 61: Synchronization icon
- 60: Highlight icon
- 62: Track title
- 63: Page number
- 64, 65: Sharing-mode icon
- 70: Information processing apparatus
- 71: CPU
- 90, 91, 92, 93, 94: Mark
- 100: Entire page
- 101: Display range

## Claims

1. An information processing apparatus comprising:
a control unit configured to perform control to display related content and display a page guide indicating a page being displayed in a whole of the related content, the related content being associated with music piece content and including a plurality of pages on which a character or an image is displayed.

2. The information processing apparatus according to claim 1, wherein
the related content includes characters that are lyrics of corresponding music piece content, and
the control unit performs control to display the related content at a time of playback of music piece content.

3. The information processing apparatus according to claim 1, wherein
the related content includes characters that are lyrics of corresponding music piece content, and
the control unit controls to execute, in the page guide, display indicating a page including lyrics and a page not including lyrics in the related content.

4. The information processing apparatus according to claim 1, wherein
the related content includes characters that are lyrics of corresponding music piece content, and
the control unit controls to execute, in the page guide, display indicating a page on which lyrics of one music piece are placed and a page on which lyrics of a plurality of music pieces are placed in the related content.

5. The information processing apparatus according to claim 1, wherein
the related content includes characters that are lyrics of corresponding music piece content, and
the control unit performs control to execute display of the related content at a time of playback of music piece content, and controls to execute, in the page guide, display indicating a currently displayed page and a page on which lyrics of a currently played music piece are placed.

6. The information processing apparatus according to claim 1, wherein
the control unit performs control to execute display of a display position guide indicating a position being displayed in one page of the related content.

7. The information processing apparatus according to claim 6, wherein
the related content includes characters that are lyrics of corresponding music piece content, and
the control unit sets an initial display position on a basis of a placement position of the lyrics in the related content.

8. The information processing apparatus according to claim 6, wherein
the control unit performs control to display the related content at a time of playback of music piece content, and performs control to change a display position of the related content in accordance with a change of a playback music piece, to indicate a display position in a page in the display position guide.

9. The information processing apparatus according to claim 6, wherein
the related content includes characters that are lyrics of corresponding music piece content, and
the control unit performs control to indicate a lyrics placement position in a page in the display position guide.

10. The information processing apparatus according to claim 1, wherein
in a case where there is no page notation in a display range of the related content, the control unit performs control to execute display of a page number.

11. The information processing apparatus according to claim 1, wherein
the related content includes characters that are lyrics of corresponding music piece content, and
the control unit performs control to display the related content at a time of playback of music piece content, and performs control to change a playback part of music piece content to a playback part corresponding to a display part of the related content, in response to a predetermined operation.

12. The information processing apparatus according to claim 1, wherein
the related content includes characters that are lyrics of corresponding music piece content, and
the control unit performs control to display the related content at a time of playback of music piece content, and performs control to change a display part of the related content to a display part corresponding to a playback part of music piece content, in response to a predetermined operation.

13. The information processing apparatus according to claim 1, wherein
the control unit performs processing of switching between a display mode in which a part of the related content is subjected to highlighting and a display mode in which the highlighting is not executed, in response to a predetermined operation.

14. The information processing apparatus according to claim 1, wherein
the control unit performs processing of switching between a display mode in which an image for a user interface is displayed in a superimposed manner on an image of the related content and a display mode in which an image for a user interface is not displayed in a superimposed manner on an image of the related content, in response to a predetermined operation.

15. The information processing apparatus according to claim 1, wherein
the control unit performs output control according to a satisfaction condition in response to determining that a predetermined condition is satisfied on a basis of a user's action related to playback of the music piece content or display of the related content.

16. The information processing apparatus according to claim 1, wherein
the control unit performs processing of displaying information related to other person on display of the related content, in response to a predetermined operation.

17. The information processing apparatus according to claim 16, wherein
the information related to other person includes any of information related to a listening part of other person, information related to a preferred part of other person, and comment information related to other person.

18. An information processing method performed by an information processing apparatus, the information processing method comprising:
executing control to display related content and display a page guide indicating a page being displayed in a whole of the related content, the related content being associated with music piece content and including a plurality of pages on which a character or an image is displayed.

19. A program for causing an information processing apparatus to execute control to:
display related content and display a page guide indicating a page being displayed in a whole of the related content, the related content being associated with music piece content and including a plurality of pages on which a character or an image is displayed.
